(19) Europäisches Patentamt
European Patent Office
Office européen des brevets

(11) **EP 2 081 330 A1**

(12) **EUROPEAN PATENT APPLICATION**
published in accordance with Art. 153(4) EPC

(43) Date of publication:
**22.07.2009 Bulletin 2009/30**

(21) Application number: **07830768.3**

(22) Date of filing: **29.10.2007**

(51) Int Cl.:
*H04L 12/56* (2006.01)     *H04B 7/26* (2006.01)
*H04L 12/28* (2006.01)     *H04Q 7/38* (0000.00)

(86) International application number:
**PCT/JP2007/071034**

(87) International publication number:
**WO 2008/053841 (08.05.2008 Gazette 2008/19)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **30.10.2006  JP 2006294664
30.10.2006  JP 2006294671
30.10.2006  JP 2006294826
30.10.2006  JP 2006294830**

(71) Applicant: **Kyocera Corporation
Kyoto-shi, Kyoto 612-8501 (JP)**

(72) Inventor: **MORITA, Kugo
Yokohama-shi
Kanagawa 224-8502 (JP)**

(74) Representative: **Richardson, Mark Jonathan et al
Keltie
Fleet Place House
2 Fleet Place
London
EC4M 7ET (GB)**

(54) **COMMUNICATION APPARATUS, COMMUNICATION METHOD, COMMUNICATION CONTROL APPARATUS, WIRELESS COMMUNICATION APPARATUS, COMMUNICATION CONTROL METHOD, AND WIRELESS COMMUNICATION METHOD**

(57) In order to detect a change in the propagation environment of a wireless communication path rapidly and accurately and to minimize the number of packets to be discarded without being reproduced due to a delay in arrival time, a communication apparatus 1 for performing communication through a wireless communication path comprises a band status monitoring unit (15) for monitoring the band status of a wireless communication path based on the comparison between an allowable range indicating an allowable receiving timing range of the packets to be received through a wireless communication path and a receiving timing of the packets received through a wireless communication path, or based on the packets received through a wireless communication path within a monitoring period corresponding to a transmission interval of the packets to be sent to a wireless communication path, and transmission band control message sending units (16, 11) for sending the corresponding party a transmission band control message for controlling a transmission band of packets based on a monitoring result by the band status monitoring unit 15.

*FIG. 2*

EP 2 081 330 A1

**Description**

CROSS REFERENCE TO RELATED APPLICATIONS

This application claims priorities to and the benefits of Japan Patent Applications No. 2006-294664, 2006-294671, 2006-294826 and 2006-294830 filed on October 30, 2006, the entire contents of which are incorporated herein by reference.

TECHNICAL FIELD

The present invention relates to a communication apparatus and a communication method for performing communication through a wireless communication path, and a novel communication control apparatus, wireless communication apparatus, communication control method and wireless communication method capable of using a plurality of different wireless communication paths and performing communication by compensating for insufficient band of one wireless communication path with respect to the band required by a real-time application in use with another wireless communication path.

BACKGROUND ART

In recent years, the Internet access has become available in every house without difficulty with increase in low-price and flat-rate ADSL services and decrease in price of high-end PCs. In addition, the data handled by the Internet access has been changed from the text-based web pages to the image, audio and video based web pages. Thus, the desire for broadband has been increased to achieve comfortable web access, and the broadband ADSL and broadband optical communication are becoming increasingly popular.

Further, in recent years, free voice communication software programs have been distributed with development of stable and high-speed Internet access environment. Therefore it is now possible to use a flat-rate voice communication among houses. In addition, it is believed that widespread use of home network and use of HDD recorder as HDD server will increase viewing of videos that are stored in an HDD server through access to a home network using a PC that is connected to a network at a different place. This may allow us to watch Japanese TV programs in foreign countries through a server of a home network server.

In the environment where each house and the Internet are connected by wire such as ADSL and optical communication, comfortable voice communication and video viewing can be achieved by selecting an encoding rate corresponding to a communication band between PCs and processing capability of the PCs by negotiation at the time of connection.

In addition, the voice communication-based mobile communication terminal trends are also moving toward broader band and higher performance these days. A data communication-based use such as accessing the Internet from a mobile communication terminal is becoming main-stream, and therefore, mobile communication terminal trends are also moving towards voice and video communications using a data communication network as is disclosed, for example, in Japanese Patent Application Laid-Open No. 2004-328593.

However, since the mobile communication terminal is wirelessly connected, its propagation/transmission path is unstable compared to the wired connection like ADSL and optical communication used in house. Because of this, a modulation scheme of wireless communication is selected at a mobile communication terminal in accordance with a change of propagation transmission path. A modulation scheme allowing a high-speed communication is selected when a propagation environment is relatively good. A modulation scheme with an improved error resilience (resulting in a low-speed communication) is selected when a propagation environment is poor and thus continuous communication can be achieved.

However, a propagation environment fluctuates according to a change in surrounding environments even if a mobile communication terminal remains still during communication. In addition, it also fluctuates depending on the characteristics of a frequency being used for communication. Furthermore, a propagation environment may change rapidly from a stable state when a mobile communication terminal is moved.

Therefore, in the case of wireless communication, when a communication is started after an encoding rate of voice and video is set by negotiation at the time of connection as in the case of the wired communication, the voice and video data can be lost due to deterioration of propagation environment.

Further, in the case of wireless communication, in order to achieve a high-speed communication, a buffer is provided on a terminal or a base station of the wireless communication network for accumulating data (packet). More specifically, when the number of users (terminals) wirelessly connected to one base station is increased, it is necessary to improve transmission efficiency of each communication to provide each user with a comfortable communication service. Because of this, it is needed to put a lot of data closely, in a short period of time and in a very dense state, and send it out by using a modulation scheme having high transmission efficiency. Consequently, a buffer with a capacity required for realizing the high density is provided.

Therefore, at a base station, the data (packet) corresponding to an encoding rate of voice and video received from a wired side (an application side in the case of a terminal) is sequentially accumulated in a buffer. Then the accumulated data (packet) is sequentially read out and sent out at a communication speed corresponding to a wireless propagation environment.

Because of this, when a wireless propagation environment becomes worse, the speed of data (packet) flowing out from the buffer becomes slower than that of the data flowing in, which increases the amount of data accumulated in the buffer. Then the accumulated data is sent out with delay along with recovery of the propagation environment.

However, accumulation of data in a buffer (retention of data) is critical to the voice and video communications that require a real-time characteristic. Therefore, even if data are sent out from a buffer at a time along with recovery of the propagation environment, most of them are discarded because these data are already out of reproduction timing. Moreover, when a speed for reading out from a buffer is slow, the data to be reproduced is insufficient and is finally lost on the receiver side and thus reproduction of the data as voice and video may be difficult.

As a method to avoid such problems, for example, at application level, it is known that a jitter-buffer is provided to accumulate data corresponding to an amount of time based on a jitter in data arrival time. When data is received, data is once accumulated in the jitter-buffer, and then is sequentially read out according to a reproduction speed of an application. Thus the jitter-buffer absorbs the jitter in data arrival time.

However, in the case of a communication path through a wireless communication network, a very large jitter-buffer is required to absorb jitters because its jitter in arrival time is larger than that of the wired network. If such a large jitter-buffer (a buffer capable of accumulating an amount of data equivalent to a long period of time) is used, for telephone conversation, voice data is reproduced as if the voice data arrived with delay, which brings discomfort to users.

In addition, as a method for achieving voice and video communication focusing on a real-time characteristic, it is possible to set encoding rate as variable in accordance with a wireless propagation environment (a change in the propagation environment depending on a change in wireless or wired communication path). In order to keep a real-time characteristic, the encoding rate can be switched to a low-rate encoding scheme when the propagation environment becomes deteriorated, and can be switched to an encoding scheme allowing improved voice and image quality when the propagation environment is recovered.

In this case, it is required to detect the propagation environment of the communication path. As one possible method, for example, an accumulated amount of data in a jitter-buffer can be monitored. When the accumulated amount becomes equal to or less than a predetermined threshold, it is possible to detect a deterioration of the propagation environment and an occurrence of data retention in the communication path.

However, in this case, for a rapid deterioration of the propagation environment (an allowable band becomes narrow), if a detection of the deterioration is delayed, the number of data (packets) retained (accumulated) in buffers on the communication path comes to increase by an amount based on the delayed time. Therefore, since the data is delayed until the retention is solved, the real-time characteristic is impaired even if the encoding rate is lowered in response to the detection of the deterioration of the propagation environment.

As another method to detect that the allowable band of a wireless communication path has become narrow, for example, it is possible to monitor the number of received packets in a window Ts (a predetermined period; e.g. 500ms). Then, when the number of received packets is less than the estimated number of packets, it is detected that the allowable band has become narrow.

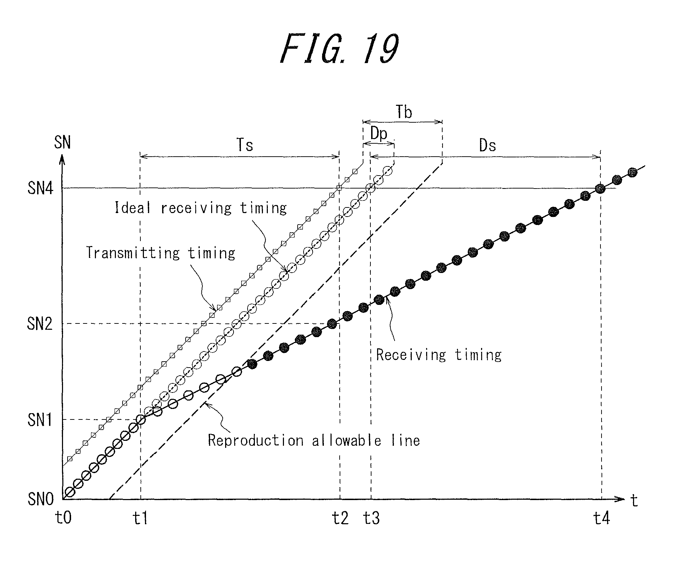

In this case, however, the retention delay time fluctuates depending on the timing of the window Ts, which is a monitoring period. For example, as shown in FIG. 19, assume that the allowable band has become narrow to 50% at the time t1 when the transmission interval of packet of the application (i.e. VoIP) is 20ms. In FIG. 19, the horizontal axis indicates a time (t) and the vertical axis indicates a sequence number (SN) of packets. In addition, Dp indicates a potential delay time from the transmission timing of a packet to the ideal receiving timing of the path (it is 80ms here), Tb indicates a reproduction allowable time from the transmission timing of packet (it is 200ms here), and Ds indicates a retention delay time.

In FIG. 19, when monitoring the number of received packets of the window Ts until the time t1, no decrease in the number of received packets is seen. However, when monitoring the number of received packets of the window Ts during (t2 - t1) at the time t2, the number of received packets is 12, which is half the estimated number of received packets (500ms/20ms = 25 packets). Therefore, it is required to reduce an encoding rate. However, in this case, since the packet (SN4) sent at the time t2 is received at the time t4, the retention delay time Ds of 580ms (= t4-t3) occurs relative to the ideal receiving time t3.

Therefore, assuming that the packets received after the reproduction allowable time Tb (packets after the reproduction allowable line) of 200ms from the transmission timing are discarded (excluded from reproduction), in this case, in FIG. 19, the 23 packets indicated by black circles out of 25 packets that have been sent within the window Ts are discarded without being contributed to reproduction.

In this manner, when it is detected that the allowable band of the path has become narrow in the case where the number of received packets is less than the estimated number of packets based on the monitoring of the number of received packets in the window Ts, the retention delay time fluctuates depending on the timing of the window Ts, which is a monitoring period. Therefore, depending on the timing of the window Ts, there is concern that most of the packets sent within the window Ts may be discarded without being contributed to reproduction.

Further, as a method to decrease the number of discarded packets, in FIG. 19, it is possible to shorten the retention delay time Ds by setting the window Ts short. However, the number of received packets in the window Ts is inversely proportional to the transmission interval of the packets of the communication path. Therefore, the number of received packets decreases as the transmission interval becomes longer.

Because of this, when the period of the window Ts is set short, setting of a threshold becomes difficult particularly when the transmission interval is long. Therefore, there is concern that a band which has become narrow cannot be detected accurately.

In addition, when data communication is performed by accessing from a wireless communication apparatus such as mobile communication terminal to the Internet, an Internet protocol (IP) group is used. With respect to the wireless communication network using this IP group (hereinafter occasionally referred to as "wireless IP network"), so-called mobile IP is defined in order to improve the mobility of the wireless communication apparatus, as disclosed in, for example, C.Perkins, "IP Mobility Support (RFC2002)", [online], October 1996, IETF, [search on March 15, 2006], Internet <URL: http: //www.ietf.org /rfc /rfc2002.txt>.

In the mobile IP, a care-of IP address (Care of Address) that is dynamically allocated according to the position of wireless communication apparatus is used.

By the way, an environment where a wireless communication apparatus can use a plurality of wireless IP networks (e.g. mobile phone network and wireless LAN network) is gradually being provided in these days.

If such an environment is provided, it could be that a plurality of wireless IP networks are used simultaneously such that when the band of the wireless IP network used for communication being performed is insufficient, the insufficient band is compensated with another wireless IP network.

However, assuming that one wireless IP network is a master path and another wireless IP network is a slave path and when the band that is insufficient in the master path is compensated with the slave path, if the allowable band of the slave path is not sufficient for the band that requires compensation, the packets to be sent out to the slave path for the band compensation are temporarily accumulated in buffers that exist on the path because the band is insufficient, and then sequentially sent out. Therefore, on a receiver side, delay occurs between the packet received through the master path and that received through the slave path. This delay appears as an overtaking of SN (sequence number) in the case of VoIP packets.

In a real-time application such as VoIP, a jitter-buffer is provided to absorb overtaking of packet in a network. However, when a delay between paths becomes larger and exceeds the buffer capacity of the jitter-buffer, the packets that are delayed and exceeding the capacity are discarded even if they are received. Therefore, if sending out of packets exceeding the allowable band is continued, the amount of packets to be accumulated in the buffers existing on the path increases (up to the limit capacity of the buffer) and causes a delay difference according to the accumulated amount. Then finally, all of the packets sent for compensation are discarded on the receiver side.

Particularly, in a wireless communication path, since an allowable band is dependent on a change in a propagation environment such as fading, even if the allowable band of the slave path is sufficient at the beginning of communication start, the band becomes narrow due to deterioration of the propagation environment, which facilitates occurrence of the above mentioned phenomenon. To avoid this, it is required to accurately detect fluctuation of the allowable band, particularly, narrow band, of the slave path for compensation and determine whether the transmission band (band allocation rate) at the present time is appropriate or not in order to avoid compensation exceeding the allowable band.

Further, since the fluctuation of allowable band also occurs on the master path side in the same manner, it is also required for the master path to accurately detect fluctuation of the allowable band, particularly, if the band has become narrow, and determine whether the transmission band (band allocation rate) at the present time is appropriate or not in order to prevent packets transmission exceeding the allowable band.

As a determination method of such a transmission band, for example, as is described in FIG.19, it is possible to determine that a transmission band has become inappropriate (defective) by setting a window Ts with a predetermined period (e.g. 500ms) for each of the communication paths, monitoring the number of received packets, and detecting that the allowable bandwidth of the communication path has become narrow when the number of received packets is less than the estimated number of packets (threshold) according to the band allocation rate of the communication path.

In this case, however, as described above, the retention delay time fluctuates depending on the timing of the window Ts, which is a monitoring period, in each of the communication paths. Therefore, there is concern that most of the packets sent within the window Ts may be discarded without being contributed to reproduction depending on the timing of the window Ts.

Further, as described above, when the retention delay time Ds is shortened by setting a window Ts short to decrease the number of discarded packets, since the number of received packets in the window Ts is proportional to the band allocation rate of the communication path, the number of received packets becomes smaller as the band allocation rate decreases. Therefore, there is concern that it becomes difficult to set a threshold particularly in the case where the band allocation rate is low, and narrowing band cannot accurately be detected.

SUMMARY OF INVENTION

TECHNICAL PROBLEM

In the view of the above problems, the first object of the present invention is to provide a communication apparatus and a communication method capable of detecting a change in a propagation environment of a wireless communication path rapidly and accurately and minimizing the number of packets to be discarded without being reproduced due to a delay in arrival time.

Further, the second object of the present invention is to provide a communication control apparatus, a wireless communication apparatus, a communication control method and a wireless communication method capable of using a plurality of different wireless communication paths, detecting that a transmission band has become narrow accurately in almost real time when performing communication while compensating for insufficient band of one wireless communication path with another wireless communication path, and effectively reducing the number of packets to be discarded without being reproduced due to a delay in arrival time.

SOLUTION TO PROBLEM

According to a first aspect of the present invention to achieve the above first object, a communication apparatus for performing communication through a wireless communication path, comprising:

a band status monitoring unit for monitoring a band status of the wireless communication path based on comparison between an allowable range indicating an allowable receiving timing range of packet to be received through the wireless communication path and a receiving timing of the packet received through the wireless communication path; and

a transmission band control message sending unit for sending a corresponding party a transmission band control message for controlling a transmission band of packet based on a monitoring result by the band status monitoring unit.

According to a second aspect of the present invention, in the communication apparatus according to the first aspect, the band status monitoring unit sets the allowable range based on a receiving timing of received packet for a predetermined period.

According to a third aspect of the present invention, the communication apparatus according to the first aspect, further comprising:

a transmission band control message receiving unit for receiving a transmission band control message for controlling a transmission band of packet from the corresponding party; and

a transmission band control unit for controlling a transmission band of packet to be sent to the corresponding party based on the transmission band control message received by the transmission band control message receiving unit or the monitoring result by the band status monitoring unit.

According to a fourth aspect of the present invention, in the communication apparatus according to the third aspect, the transmission band control unit controls an encoding rate of data to be sent to the corresponding party or transfer of file.

Further, the present invention of a communication method for performing communication through a wireless communication path according to a fifth aspect to achieve the above first object, comprising:

monitoring a band status of the wireless communication path based on an allowable range indicating an allowable receiving timing range of packet to be received through the wireless communication path and a receiving timing of packet received through the wireless communication path;

sending a transmission band control message for controlling a transmission band of packet to a corresponding party based on the monitoring result, and

controlling the transmission band based on the transmission band control message while performing communication.

Further, according to a sixth aspect of the present invention to achieve the above first object, a communication method for sending and receiving packets of a plurality of different data to and from one corresponding party through a wireless communication path, comprising:

monitoring a band status of the wireless communication path based on an allowable range indicating an allowable receiving timing range of packet to be received through the wireless communication path and a receiving timing of packet received through the wireless communication path, with respect to each of the plurality of different data; and sending a transmission band control message for reducing a transmission rate of all data to the corresponding party when it is suggested that a transmission band with respect to either one of the data has become narrow based on the monitoring result.

Further, according to a seventh aspect of the present invention to achieve the above first object, a communication method for sending and receiving packets of a plurality of different data to and from one corresponding party through a wireless communication path, comprising:

monitoring a wireless status of the wireless communication path,
monitoring a band status of the wireless communication path based on an allowable range indicating an allowable receiving timing range of packet to be received through the wireless communication path and a receiving timing of packet received through the wireless communication path with respect to each of the plurality of different data;
when it is suggested, based on the monitoring result of the wireless status and the monitoring result of the band status, that the wireless status is good and, as the band status, a transmission band for either one of the data has become narrow, sending a transmission band control message for reducing a transmission rate of the one data or for stopping sending of data to the corresponding party; and
when it is suggested that the wireless status has deteriorated and, as the band status, the transmission band for either one of the data has become narrow, sending a transmission band control message for reducing the transmission rate of all data or for stopping sending of data to the corresponding party.

Further, according to an eighth aspect of the present invention to achieve the above first object, a communication apparatus for performing communication through a wireless communication path, comprising:

a band status monitoring unit for monitoring a band status of the wireless communication path based on packet received through the wireless communication path within a monitoring period corresponding to a transmission interval of packet to be sent to the wireless communication path; and
a transmission band control message sending unit for sending a corresponding party a transmission band control message for controlling a transmission band of packet based on a monitoring result by the band status monitoring unit.

According to a ninth aspect of the present invention, in the communication apparatus according to the eighth aspect, the band status monitoring unit sets a transmission period of sequential predetermined number of packets to be sent at the transmission interval as the monitoring period.

According to a tenth aspect of the present invention, in the communication apparatus according to the eighth aspect, the band status monitoring unit calculates a displacement degree of a receiving timing of packet to be received through the wireless communication path within the monitoring period and monitors the band status based on comparison between the calculated displacement degree and a threshold corresponding to the transmission interval.

According to an eleventh aspect of the present invention, the communication apparatus according to the eighth aspect, further comprising:

a transmission band control message receiving unit for receiving a transmission band control message for controlling a transmission band of packet from the corresponding party; and
a transmission band control unit for controlling a transmission band of packet to be sent to the corresponding party based on the transmission band control message received by the transmission band control message receiving unit or the monitoring result by the band status monitoring unit.

According to a twelfth aspect of the present invention, in the communication apparatus according to the eleventh aspect, the transmission band control unit controls an encoding rate of data to be sent to the corresponding party or transfer of file.

Further, the present invention of a communication method for performing communication through a wireless communication path according to a thirteenth aspect to achieve the above first object, comprising:

monitoring a band status of the wireless communication path based on packet received through the wireless communication path within a monitoring period corresponding to a transmission interval of packet to be sent to the wireless communication path;

sending a transmission band control message for controlling a transmission band of packet to a corresponding party based on the monitoring result, and

controlling the transmission band based on the transmission band control message while performing communication.

Further, according to a fourteenth aspect of the present invention to achieve the above first object, a communication method for sending and receiving packets of a plurality of different data to and from one corresponding party through a wireless communication path, comprising:

monitoring a band status of the wireless communication path based on packet received through the wireless communication path within a monitoring period corresponding to a transmission interval of packet to be sent to the wireless communication path, with respect to each of the plurality of different data; and

sending a transmission band control message for reducing a transmission rate of all data to the corresponding party when it is suggested that a transmission band with respect to either one of the data has become narrow based on the monitoring result.

Further, according to a fifteenth aspect of the present invention to achieve the above first object, a communication method for sending and receiving packets of a plurality of different data to and from one corresponding party through a wireless communication path, comprising:

monitoring a wireless status of the wireless communication path;

monitoring a band status of the wireless communication path based on packet received through the wireless communication path within a monitoring period corresponding to a transmission interval of packet to be sent to the wireless communication path, with respect to each of the plurality of different data;

when it is suggested, based on a monitoring result of the wireless status and a monitoring result of the band status, that the wireless status is good and, as the band status, a transmission band for either one of the data has become narrow, sending a transmission band control message for reducing a transmission rate with respect to the one data or for stopping sending of data to the corresponding party; and

when it is suggested that the wireless status has deteriorated and, as the band status, the transmission band for either one of the data has become narrow, sending a transmission band control message for reducing the transmission rate of all data or for stopping sending of data to the corresponding party.

Further, according to a sixteenth aspect of the present invention to achieve the above second object, a communication control apparatus capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising:

a first upward allowable range setting unit for setting a first upward allowable range indicating an allowable receiving timing range of packet to be received through the one wireless communication path;

a first upward band status determining unit for determining an upward band status of the one wireless communication path based on comparison between the first upward allowable range set by the first upward allowable range setting unit and a receiving timing of packet received through the one wireless communication path;

a first upward transmission control unit for sending the wireless communication apparatus first upward transmission control information for controlling a transmission band of packet to be sent by the wireless communication apparatus to the one wireless communication path based on a determination result of the first upward band status determining unit;

a second upward allowable range setting unit for setting a second upward allowable range indicating an allowable receiving timing range of packet to be received through the another wireless communication path;

a second upward band status determining unit for determining an upward band status of the another wireless communication path based on comparison between the second upward allowable range set by the second upward allowable range setting unit and a receiving timing of packet received through the another wireless communication path; and

a second upward transmission control unit for sending the wireless communication apparatus second upward transmission control information for controlling a transmission band of packet to be sent by the wireless communication apparatus to the another wireless communication path based on a determination result of the second upward band status determining unit.

According to a seventeenth aspect of the present invention, in the communication control apparatus according to the sixteenth aspect,

the first upward allowable range setting unit sets the first upward allowable range as an allowable range from an ideal receiving timing of packet of the one wireless communication path based on a receiving timing of packet received for a predetermined period through the one wireless communication path; and
the second upward allowable range setting unit sets the second upward allowable range as an allowable range from an ideal receiving timing of packet of the another wireless communication path based on a receiving timing of packet received for a predetermined period through the another wireless communication path.

According to an eighteenth aspect of the present invention, in the communication control apparatus according to the sixteenth aspect,

the first upward transmission control unit sends the wireless communication apparatus control information for reducing a band allocation rate of packet to be sent to the one wireless communication path by the wireless communication apparatus as the first upward transmission control information when the first upward band status determining unit determines that a band of the one wireless communication path has become narrow; and
the second upward transmission control unit sends the wireless communication apparatus control information for reducing a band allocation rate of packet to be sent to the another wireless communication path by the wireless communication apparatus as the second upward transmission control information when the second upward band status determining unit determines that a band of the another wireless communication path has become narrow.

Further, according to a nineteenth aspect of the present invention to achieve the above second object, a wireless communication apparatus capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising:

a first downward allowable range setting unit for setting a first downward allowable range indicating an allowable receiving timing range of packet to be received through the one wireless communication path;
a first downward band status determining unit for determining a downward band status of the one wireless communication path based on comparison between the first downward allowable range set by the first downward allowable range setting unit and a receiving timing of packet received through the one wireless communication path;
a first downward transmission control unit for sending the communication control apparatus first downward transmission control information for controlling a transmission band of packet to be sent by the communication control apparatus to the one wireless communication path based on a determination result of the first downward band status determining unit;
a second downward allowable range setting unit for setting a second downward allowable range indicating an allowable receiving timing range of packet to be received through the another wireless communication path;
a second downward band status determining unit for determining a downward band status of the another wireless communication path based on comparison between the second downward allowable range set by the second downward allowable range setting unit and a receiving timing of packet received through the another wireless communication path; and
a second downward transmission control unit for sending the communication control apparatus second downward transmission control information for controlling a transmission band of packet to be sent by the communication control apparatus to the another wireless communication path based on a determination result of the second downward band status determining unit.

According to a twentieth aspect of the present invention, in the wireless communication apparatus according to the nineteenth aspect,

the first downward allowable range setting unit sets the first downward allowable range as an allowable range from an ideal receiving timing of packet of the one wireless communication path based on a receiving timing of packet received for a predetermined period through the one wireless communication path; and
the second downward allowable range setting unit sets the second downward allowable range as an allowable range from an ideal receiving timing of packet of the another wireless communication path based on a receiving timing of packet received for a predetermined period through the another wireless communication path.

According to a twenty first aspect of the present invention, in the wireless communication apparatus according to the nineteenth aspect,

the first downward transmission control unit sends the communication control apparatus the control information for reducing a band allocation rate of packet to be sent to the one wireless communication path by the communication control apparatus as the first downward transmission control information when the first downward band status determining unit determines that a band of the one wireless communication path has become narrow; and the second downward transmission control unit sends the communication control apparatus the control information for reducing a band allocation rate of packet to be sent to the another wireless communication path by the communication control apparatus as the second downward transmission control information when the second downward band status determining unit determines that a band of the another wireless communication path has become narrow.

Further, according to a twenty-second aspect of the present invention to achieve the above second object, a communication control method capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising the steps of:

setting a first upward allowable range indicating an allowable receiving timing range of packet to be received through the one wireless communication path; determining an upward band status of the one wireless communication path based on comparison between the set first upward allowable range and a receiving timing of packet received through the one wireless communication path; sending the wireless communication apparatus first upward transmission control information for controlling a transmission band of packet to be sent by the wireless communication apparatus to the one wireless communication path based on the determination result; setting a second upward allowable range indicating an allowable receiving timing range of packet to be received through the another wireless communication path; determining an upward band status of the another wireless communication path based on comparison between the set second upward allowable range and a receiving timing of packet received through the another wireless communication path; and sending the wireless communication apparatus second upward transmission control information for controlling a transmission band of packet to be sent by the wireless communication apparatus to the another wireless communication path based on the determination result.

Further, according to a twenty-third aspect of the present invention to achieve the above second object, a wireless communication method capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising the steps of:

setting a first downward allowable range indicating an allowable receiving timing range of packet to be received through the one wireless communication path; determining a downward band status of the one wireless communication path based on comparison between the set first downward allowable range and a receiving timing of packet received through the one wireless communication path; sending the communication control apparatus first downward transmission control information for controlling a transmission band of packet to be sent by the communication control apparatus to the one wireless communication path based on the determination result; setting a second downward allowable range indicating an allowable receiving timing range of packet to be received through the another wireless communication path; determining a downward band status of the another wireless communication path based on comparison between the set second downward allowable range and a receiving timing of packet received through the another wireless communication path; and sending the communication control apparatus second downward transmission control information for controlling a transmission band of packet to be sent by the communication control apparatus to the another wireless communication path based on the determination result.

Further, according to a twenty-fourth aspect of the present invention to achieve the above second object, a communication control apparatus capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising:

a first upward band allocation rate determining unit for determining a band allocation rate of packet to be sent by the wireless communication apparatus to the one wireless communication path;
a first upward band status determining unit for determining an upward band status of the one wireless communication path based on packet to be received through the one wireless communication path within a first upward monitoring period corresponding to a band allocation rate determined by the first upward band allocation rate determining unit;
a first upward transmission control unit for sending the wireless communication apparatus first upward transmission control information for controlling a transmission band of packet to be sent by the wireless communication apparatus to the one wireless communication path based on a determination result of the first upward band status determining unit;
a second upward band allocation rate determining unit for determining a band allocation rate of packet to be sent by the wireless communication apparatus to the another wireless communication path;
a second upward band status determining unit for determining an upward band status of the another wireless communication path based on packet to be received through the another wireless communication path within a second upward monitoring period corresponding to a band allocation rate determined by the second upward band allocation rate determining unit; and
a second upward transmission control unit for sending the wireless communication apparatus second upward transmission control information for controlling a transmission band of packet to be sent by the wireless communication apparatus to the another wireless communication path based on a determination result of the second upward band status determining unit.

According to a twenty-fifth aspect of the present invention, in the communication control apparatus according to the twenty-fourth aspect,

the first upward monitoring period corresponds to a transmission period of sequential predetermined number of packets to be sent by the wireless communication apparatus to the one wireless communication path at a band allocation rate determined by the first upward band allocation rate determining unit; and
the second upward monitoring period corresponds to a transmission period of sequential predetermined number of packets to be sent by the wireless communication apparatus to the another wireless communication path at a band allocation rate determined by the second upward band allocation rate determining unit.

According to a twenty-sixth aspect of the invention, in the communication control apparatus according to the twenty-fourth aspect,

the first upward band status determining unit calculates a displacement degree of a receiving timing of packet to be received through the one wireless communication path within the first upward monitoring period and determines the upward band status of the one wireless communication path based on comparison between the calculated displacement degree and a threshold corresponding to the band allocation rate determined by the first upward band allocation rate determining unit; and
the second upward band status determining unit calculates a displacement degree of a receiving timing of packet to be received through the another wireless communication path within the second upward monitoring period and determines the upward band status of the another wireless communication path based on comparison between the calculated displacement degree and a threshold corresponding to the band allocation rate determined by the second upward band allocation rate determining unit.

Further, according to a twenty-seventh aspect of the present invention to achieve the above second object, a wireless communication apparatus capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising:

a first downward band allocation rate determining unit for determining a band allocation rate of packet to be sent by the communication control apparatus to the one wireless communication path;
a first downward band status determining unit for determining a downward band status of the one wireless communication path based on packet to be received through the one wireless communication path within a first downward monitoring period corresponding to the band allocation rate determined by the first downward band allocation rate determining unit;

a first downward transmission control unit for sending the communication control apparatus first downward transmission control information for controlling a transmission band of packet to be sent by the communication control apparatus to the one wireless communication path based on a determination result of the first downward band status determining unit;

a second downward band allocation rate determining unit for determining a band allocation rate of packet to be sent by the communication control apparatus to the another wireless communication path;

a second downward band status determining unit for determining a downward band status of the another wireless communication path based on packet to be received through the another wireless communication path within a second downward monitoring period corresponding to the band allocation rate determined by the second downward band allocation rate determining unit; and

a second downward transmission control unit for sending the communication control apparatus second downward transmission control information for controlling a transmission band of packet to be sent by the communication control apparatus to the another wireless communication path based on a determination result of the second downward band status determining unit.

According to a twenty-eighth aspect of the present invention, in the wireless communication apparatus according to the twenty-seventh aspect,

the first downward monitoring period corresponds to a transmission period of sequential predetermined number of packets to be sent to the one wireless communication path by the communication control apparatus at the band allocation rate determined by the first downward band allocation rate determining unit; and

the second downward monitoring period corresponds to a transmission period of sequential predetermined number of packets to be sent to the another wireless communication path by the communication control apparatus at the band allocation rate determined by the second downward band allocation rate determining unit.

According to a twenty-ninth aspect of the present invention, in the wireless communication apparatus according to the twenty-seventh aspect,

the first downward band status determining unit calculates a displacement degree of a receiving timing of packet to be received through the one wireless communication path within the first downward monitoring period and determines the downward band status of the one wireless communication path based on comparison between the calculated displacement degree and a threshold corresponding to the band allocation rate determined by the first downward band allocation rate determining unit; and

the second downward band status determining unit calculates a displacement degree of a receiving timing of packet to be received through the another wireless communication path within the second downward monitoring period and determines the downward band status of the another wireless communication path based on comparison between the calculated displacement degree and a threshold corresponding to the band allocation rate determined by the second downward band allocation rate determining unit.

Further, according to a thirtieth aspect of the present invention to achieve the above second object, a communication control method capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising the steps of :

determining a band allocation rate of packet to be sent by the wireless communication apparatus to the one wireless communication path;

determining an upward band status of the one wireless communication path based on packet to be received through the one wireless communication path within a first upward monitoring period corresponding to the determined band allocation rate;

sending the wireless communication apparatus first upward transmission control information for controlling a transmission band of packet to be sent by the wireless communication apparatus to the one wireless communication path based on the determination result;

determining a band allocation rate of packet to be sent by the wireless communication apparatus to the another wireless communication path;

determining an upward band status of the another wireless communication path based on packet to be received through the another wireless communication path within a second upward monitoring period corresponding to the determined band allocation rate; and

sending the wireless communication apparatus second upward transmission control information for controlling a transmission band of packet to be sent by the wireless communication apparatus to the another wireless communication path based on the determination result.

Further, according to a thirty-first aspect of the present invention to achieve the above second object, a wireless communication method capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising the steps of:

determining a band allocation rate of packet to be sent by the communication control apparatus to the one wireless communication path;

determining a downward band status of the one wireless communication path based on packet to be received through the one wireless communication path within a first downward monitoring period corresponding to the determined band allocation rate;

sending the communication control apparatus first downward transmission control information for controlling a transmission band of packet to be sent by the communication control apparatus to the one wireless communication path based on the determination result;

determining a band allocation rate of packet to be sent by the communication control apparatus to the another wireless communication path;

determining a downward band status of the another wireless communication path based on packet to be received through the another wireless communication path within a second downward monitoring period corresponding to the determined band allocation rate; and

sending the communication control apparatus second downward transmission control information for controlling a transmission band of packet to be sent by the communication control apparatus to the another wireless communication path based on the determination result.

ADVANTAGEOUS EFFECTS ON INVENTION

According to the first to seventh aspects of the present invention, a band status is monitored based on an allowable range indicating an allowable receiving timing range of the packets to be received through a wireless communication path and a receiving timing of the packets received, and a transmission band control message based on the monitoring result is sent to the corresponding party. Therefore, it is possible to control a transmission band corresponding to the band status appropriately in real time on a sender side by detecting a change in the propagation environment of the wireless communication path rapidly. Thus the number of packets to be discarded without being reproduced due to a delay in arrival time can be minimized.

According to the eighth to fifteenth aspects of the present invention, a band status is monitored based on the packets received within a monitoring period corresponding to a transmission interval of the packets to be sent to a wireless communication path, and a transmission band control message based on the monitoring result is sent to the corresponding party. Therefore, it is possible to control a transmission band corresponding to the band status appropriately in real-time on a sender side by detecting a change in the propagation environment of a wireless communication path accurately and rapidly. Thus the number of packets to be discarded without being reproduced due to a delay in arrival time can be minimized.

According to the sixteenth to twenty-third aspects of the present invention, when communication is performed by compensating for insufficient band of one wireless communication path with another wireless communication path by using a plurality of different wireless communication paths simultaneously, it is possible to detect almost in real-time when a transmission band has become narrow in each wireless communication path. Therefore it is possible to provide a communication control apparatus, a wireless communication apparatus, a communication control method and a wireless communication method capable of minimizing the number of packets to be discarded without being reproduced due to a delay in arrival time.

According to the twenty-fourth to thirty-first aspects of the present invention, when communication is performed by compensating for insufficient band of one wireless communication path with another wireless communication path by using a plurality of different wireless communication paths simultaneously, it is possible to detect rapidly and accurately when a transmission band has become narrow in each wireless communication path. Therefore it is possible to provide a communication control apparatus, a wireless communication apparatus, a communication control method and a wireless communication method capable of effectively reducing the number of packets to be discarded without being reproduced due to a delay in arrival time.

BRIEF DESCRIPTION OF DRAWINGS

FIG. 1 is a schematic diagram illustrating the schematic configuration of a communication system that employs the communication apparatus according to the first embodiment of the present invention;

FIG. 2 is a function block diagram illustrating the schematic configuration of main parts of the mobile communication terminal and the home video server shown in FIG.1;

FIG. 3 is an example of the band status monitoring result according to the first embodiment of the present invention;

FIG. 4 is another example of the band status monitoring result according to the first embodiment of the present invention;

FIG. 5 is a still another example of the band status monitoring result according to the first embodiment of the present invention;

FIG. 6 is a diagram illustrating the setting method of ideal receiving timing according to the first embodiment of the present invention;

FIG. 7 is a schematic diagram illustrating the schematic configuration of a communication system that employs the communication apparatus according to the second embodiment of the present invention;

FIG. 8 is a function block diagram illustrating the schematic configuration of main parts of the mobile communication terminal and the communication terminal shown in FIG. 7;

FIG. 9 is a diagram showing an example of the monitoring result of the band status according to the third embodiment of the present invention;

FIG. 10 is a diagram showing another example of the monitoring result of the band status according to the third embodiment of the present invention;

FIG. 11 is a diagram showing a still another example of the monitoring result of the band status according to the third embodiment of the present invention;

FIG. 12 is a schematic diagram illustrating an overall communication system according to the fifth embodiment of the present invention;

FIG. 13 is a function block configuration diagram of the switching server shown in FIG. 12;

FIG. 14 is an IP packet configuration diagram according to the embodiment shown in FIG. 12;

FIG. 15 is a function block configuration diagram of the MN shown in FIG. 1;

FIG. 16 is a sequence diagram of the communication performed between the switching server and the MN according to the fifth embodiment of the present invention;

FIG. 17 is a function block configuration diagram of the switching server constituting the communication system according to the sixth embodiment of the present invention;

FIG. 18 is a function block configuration diagram of the MN constituting the communication system according to the sixth embodiment of the present invention; and

FIG. 19 is a diagram illustrating the determination method of transmission band using a monitoring period and problems thereof.

DESCRIPTION OF THE NUMBERS

[0075]

1. Mobile communication terminal
2. Wireless network
3. Network
4. Home video server
11. Transmitting/receiving unit
12. Image/voice decoding unit
13. Display unit
14. Voice output unit
15. Received packet monitoring unit
16. Control unit
21. Video accumulating unit
22. Image/voice decoding unit

23. Image/voice encoding unit

24. Transmitting/receiving unit

25. Control unit

51. Mobile communication terminal

52. Image input unit

53. Voice input unit

54. Image/voice encoding unit

55. Control unit

56. Transmitting unit

57. Accumulating unit

58. Receiving unit

59. Image/voice decoding unit

60. Display unit

61. Voice output unit

62. Reproduction unit

63. Received packet monitoring unit

71. Communication terminal

10. Communication system

10A, 10B. Wireless IP network

20. Internet

30. Relay center

40. User premise

41. IP phone switching unit

42. IP phone terminal

100. Switching server

101, 103. Communication interface unit

105. Packet relay unit

107, 107'. Band calculating unit

107A. First upward allowable range setting unit

107B. First upward band status determining unit

107C. Second upward allowable range setting unit

107D. Second upward band status determining unit

107A'. First upward band allocation rate determining unit

107C'. Second upward band allocation rate determining unit

109. Transmission packet distributing unit

111. Main control unit

113. Memory unit

200A, 200B. VPN router

300. MN (wireless communication apparatus)

301, 303. Wireless communication card

305A, 305B. Care-ofIP address interface unit

307, 307'. Band calculating unit

307A. First downward allowable range setting unit

307B. First downward band status determining unit

307C. Second downward allowable range setting unit

307D. Second downward band status determining unit

307A'. First downward band allocation rate determining unit

307C'. Second downward band allocation rate determining unit

309. Transmission packet distributing unit

311. Main control unit

313. Memory unit

A1, A2. Care-ofIP address

AH. Home IP address

BEST MODE FOR CARRYING OUT THE INVENTION

Preferred embodiments of the present invention will now be described with reference to the accompanying drawings.

[First Embodiment]

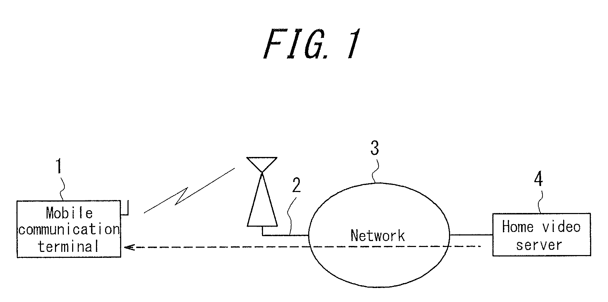

FIG. 1 is a schematic diagram illustrating the configuration of the communication system employing the communication apparatus according to a first embodiment of the present invention. As shown in FIG.1, a mobile communication terminal 1, which is a communication apparatus, is connectable to a wireless network 2 through a wireless communication path. The wireless network 2 is connected to a wired network 3, to which a home video server 4 is connected. In the present embodiment, the mobile communication terminal 1 is connected to the home video server 4 through a network including the wireless network 2 and the wired network 3, and reproduction is made by receiving video data delivered as a packet from the home video server 4.

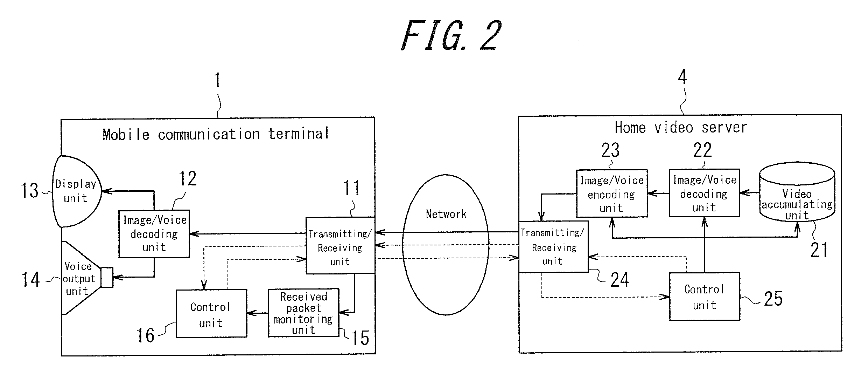

FIG. 2 is a function block diagram illustrating the schematic configuration of the main parts of the mobile communication terminal 1 and the home video server 4 shown in FIG. 1. The mobile communication terminal 1 has a transmitting/receiving unit 11, an image/voice decoding unit 12, a display unit 13, a voice output unit 14, a received packet monitoring unit 15 and a control unit 16. The transmitting/receiving unit 11 wirelessly transmits and receives packets. Packets from the home video server 4 received by the transmitting/receiving unit 11 are supplied to the image/voice decoding unit 12, where image encoded data and voice encoded data are decoded respectively. Then the decoded image signal is supplied to the display unit 13 to display the image, and the decoded voice signal is supplied to the voice output unit 14 to output the voice.

In addition, (RTP) packets from the home video server 4 received by the transmitting/receiving unit 11 are supplied to the received packet monitoring unit 15, where the band status of the wireless communication path in the wireless network 2 is monitored based on the received packets, and the monitoring result is supplied to the control unit 16. Therefore, in the present embodiment, the received packet monitoring unit 15 constitutes a band status monitoring unit. A monitoring method of the band status of a wireless communication path by using this received packet monitoring unit 15 will be described hereinafter.

The control unit 16 controls overall operation of the mobile communication terminal 1, such as authentication with the home video server 4 through the transmitting/receiving unit 11. In addition, the control unit 16 generates a transmission band control message based on the monitoring result by the received packet monitoring unit 15, and sends the generated transmission band control message as a control packet to the home video server 4 through the transmitting/receiving unit 11. In other words, when the control unit 16 obtains the monitoring result indicating that the allowable band has become narrow from the received packet monitoring unit 15, the control unit 16 generates a transmission band control message indicating so, and sends the message to the home video server 4 through the transmitting/receiving unit 11. When the band that has become narrow is recovered, in the same manner, the control unit 16 generates a transmission band control message indicating so and sends the message to the home video server 4 through the transmitting/receiving unit 11. Therefore, in the present embodiment, the control unit 16 and the transmitting/receiving unit 11 constitute a transmission band control message sending unit.

On the other hand, the home video server 4 comprises a video accumulating unit 21, an image/voice decoding unit 22, an image/voice encoding unit 23, a transmitting/receiving unit 24 and a control unit 25. The video accumulating unit 21 accumulates videos. The videos accumulated in the video accumulating unit 21 are encoded to image encoded data and voice encoded data respectively by the image/voice encoding unit 23 after being decoded to image and voice respectively by the image/voice decoding unit 22. Then the image encoded data and the voice encoded data are sent as packets to the network 3 by the transmitting/receiving unit 24. The transmitting/receiving unit 24 may be connected to the network 3 by wire or through a wireless network that is different from the wireless network 2.

The control unit 25 controls overall operation of the home video server 4, such as authentication with the mobile communication terminal 1 through the transmitting/receiving unit 24. Further, the control unit 25 controls so that the encoding rates for image data and voice data by the image/voice encoding unit 23 are reduced when receiving a transmission band control message indicating that the allowable band has become narrow from the mobile communication terminal 1. After that, the control unit 25 controls so that the encoding rate is increased (quality improvement) when it receives a transmission band control massage indicating recovery of the allowable band. It should be noted that the encoding rate is controlled by a method such as changing a quantization table or an encoding scheme itself.

Next, a monitoring method of the band status of a wireless communication path using the received packet monitoring unit 15 of the mobile communication terminal 1 is described.

In the present embodiment, based on the receiving timing of the packets received through an wireless communication path of the wireless network 2, the allowable range from an ideal receiving timing of packets of the wireless communication path is set. Then whether or not the receiving timing of the packets received through the wireless communication path is within the set allowable range is monitored. When the timing is outside the allowable range, it is detected that the allowable band has become narrow.

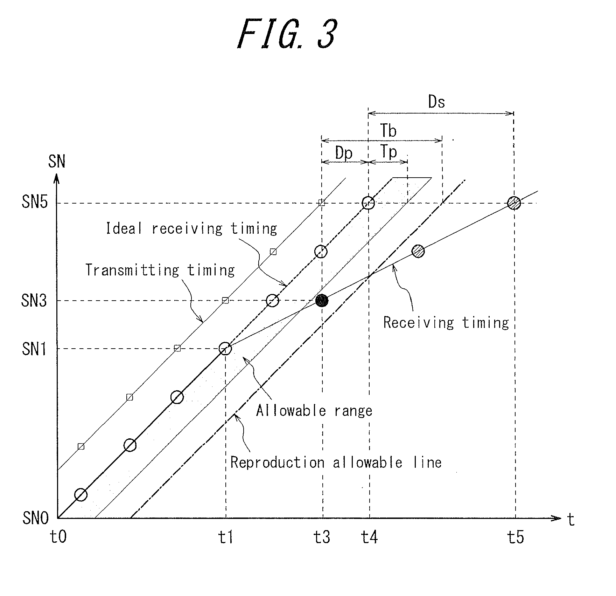

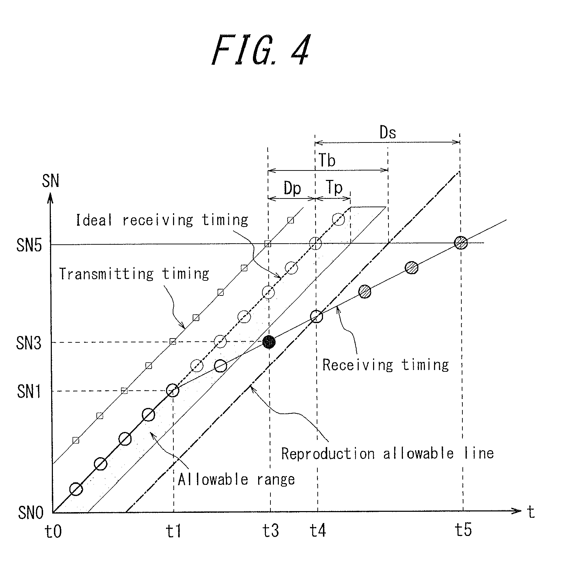

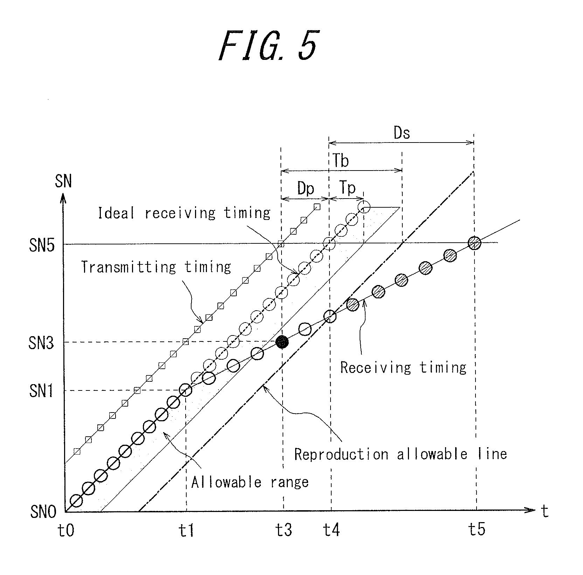

FIGS. 3 to 5 exemplify the monitoring result of the band status according to the present embodiment. FIG. 3 shows a case where the packet transmission interval of the application is 80ms. FIG. 4 shows a case where the packet transmission interval of the application is 40ms, and FIG. 5 shows a case where the packet transmission interval of the application is 20ms. Further, in FIGS. 3~5, the horizontal axis indicates a time t and the vertical axis indicates a sequence number (SN) of packet. In addition, Tp shows an allowable range from the ideal receiving timing of packets of the wireless communication path (it is 60ms here), Dp shows a potential delay time from the transmission timing of packets to the ideal receiving timing of the path (it is 80ms here), Tb shows a reproduction allowable time from the transmission timing of packets (it is 200ms here), and Ds shows a retention delay time.

In FIGS. 3 to 5, assume that the allowable band of the wireless communication path becomes narrow to 50% after the time t1 when the packet SN1 is received. In this case, when the packet transmission interval is 80ms as shown in FIG 3, the receiving timing of the packet SN3 is outside the allowable range Tp at the time t3 when the next packet SN3 (indicated in black circle) is received. Therefore, it is detected that the allowable band of the wireless communication path has become narrow at the time t3. In addition, the retention delay time Ds caused by the packets sent until the time t3 is 240ms. Therefore, in this case, the number of packets to be discarded (shaded circles) after the reproduction allowable line is just two.

Further, in FIG.4 where the packet transmission interval is 40ms, the receiving timing of the packet SN3 is outside the allowable range Tp at the time t3 when the second packet SN3 (black circle) is received after the packet SN1 is received at the time t1. Therefore, it is detected that the allowable band of the wireless communication path has become narrow at the time t3. In addition, the retention delay time Ds caused by the packets sent until the time t3 is 240ms. Therefore, in this case, the number of packets to be discarded (shaded circles in the figure) after the reproduction allowable line is just 3.

In the same manner, in FIG.5 where the packet transmission interval is 20ms, the receiving timing of the packet SN3 is outside the allowable range Tp at the time t3 when the fourth packet SN3 (black circle) is received after the packet SN1 is received at the time t1. Therefore, it is detected that the allowable band of the wireless communication path has become narrow at the time t3. In addition the retention delay time Ds caused by the packets sent until the time t3 is 240ms. Therefore, in this case, the number of packets to be discarded (shaded circles in the figure) after the reproduction allowable line is just 6.

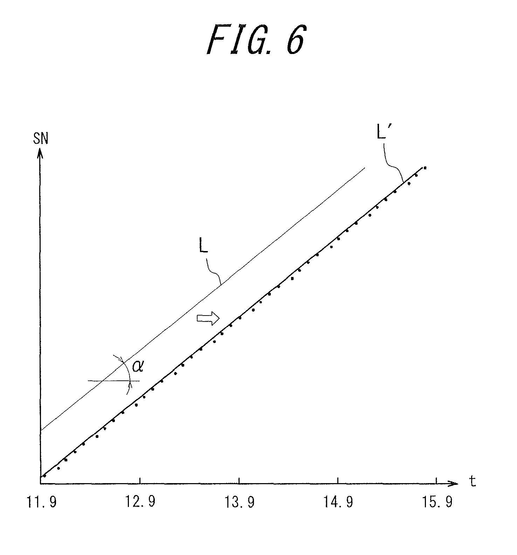

Next, the setting methods of the ideal receiving timing and the allowable range shown in FIGS. 3 to 5 are described. To set the ideal receiving timing, at first, as shown in FIG.6, a line L having a gradient angle $\alpha$ indicating a relationship (t-SN) between the packet transmission time (t) and the sequence number (SN) according to application (e.g. VoIP) is determined. For example, when the packet transmission interval from the application is 20ms, a line L having $\alpha = 50$ (SN/s) is determined. Then, assuming that the received packets are positioned in the direction of delay relative to the line L, the received packets in a predetermined period at the beginning of communication start are plotted on the graph of SN-t. Then when the line L is moved from left to right, the line L' after being moved to the rightmost position where no plot of the received packets exists on its left side is set as an ideal receiving timing.

Detailed calculation example of the ideal receiving timing in this case is described hereinafter. At first, a reference line (SN-tstd) equivalent to the line L in FIG.6 is assumed as follows;

$$\mathrm{SN} = \alpha_{std} * t_{std}, \quad t_{std} = \mathrm{SN}/\alpha_{std}$$

Here, $\alpha_{std}$ is a gradient defined by the application. For example, in the case of VoIP, it is 1SN/20ms (50SN/s).

Next, the time difference (Tstdsub(s)) between the reference line and the received packet is calculated from the following equation;

$$\mathrm{Tstdsub}(s) = t(s) - t_{std}(s).$$

For example, assuming that a sequence number of the "s th" received packet is SN(s),

$$\mathrm{Tstdsub}(s) = t(s) - \{\mathrm{SN}(s)/\alpha_{std}\}.$$

Here, among the received packets (s), the minimum value (Tsubmin) of the time difference (Tstdsub) is determined.

[Equation 1]

$$\mathrm{T\,submin} = \min_{s}^{ALL} \ (\mathrm{T\,stdsub}\ (s))$$

Assuming that the line based on Tsubmin is the ideal receiving timing (SN-tass),

$$\mathrm{tass} = (SN/\alpha std) + \mathrm{Tsubmin}.$$

In other words, among the received packets, a line based on the packet whose (received time - sent time) is minimum (equivalent to L' in FIG.6) is defined as the ideal receiving timing.

In addition, for example, the allowable range Tp is primarily set based on the ideal receiving timing according to the communication scheme, or according to the modulation scheme or the transmission band in use, or is set by calculation based on the actual receiving timing of the packets.

When the allowable range Tp is set based on calculation, for example, it is set based on the average receiving timing of the received packets in a predetermined period at the beginning of communication start. In other words, after the ideal receiving timing is set at the beginning of communication start, the delta time Tsub between the receiving time trec of the packets and the receiving time of the ideal receiving timing tide is calculated from the following equation.

$$\mathrm{Tsub}(s) = \mathrm{trec}(s) - \mathrm{tide}(s)$$

Then, the allowable range Tp is calculated based on the average value of the delta time Tsub, that is, the average value of the delay time spread of the received packets during stable communication, is calculated from the following equation. In the following equation, s indicates receiving number allocated to a received packet in a predetermined period, $\beta$ indicates coefficient, and "mean" indicates averaging processing.

[Equation 2]

$$\mathrm{T\,p} = \beta \times \underset{s}{mean}\,\mathrm{T\,sub}\ (s)$$

In this manner, by setting an allowable range Tp of a wireless communication path, comparing the receive timing of the packets with the allowable range Tp, and monitoring the band status of the wireless communication path, corresponding to the communication method of wireless communication path, fluctuation of allowable band according to a change in the propagation environment such as fading can be detected in almost real-time. Therefore, when narrow band is detected based on the monitoring result, a transmission band control message indicating so is generated and the transmission band control message is sent to the home video server 4, which is a destination of packets. Then, in the home video server 4, the encoding rates of the image data and the voice data to be sent are reduced. Thus the number of packets to be discarded without being reproduced due to a delay in arrival time can be minimized in a real-time application.

[Second Embodiment]

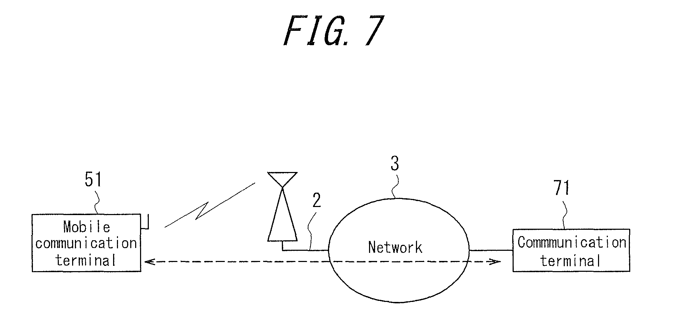

FIG. 7 is a schematic diagram illustrating the schematic configuration of the communication system employing the communication apparatus according to a second embodiment of the present invention. As shown in FIG.7, a mobile communication terminal 51, which is a communication apparatus, is connectable to a wireless network 2 through a wireless communication path. The wireless network 2 is connected to a wired network 3, to which a communication terminal 71 such as a PC, which is a communication apparatus, is connected. Software for communication is installed on the mobile communication terminal 51 and the communication terminal 71. In the present embodiment, the mobile communication terminal 51 and the communication terminal 71 are connected through a network including the wireless network 2 and the network 3, and image data and voice data are mutually sent and received in real-time. The communication terminal 71 may be connected to the network 3 by wire or through a wireless network that is different from the wireless network 2.

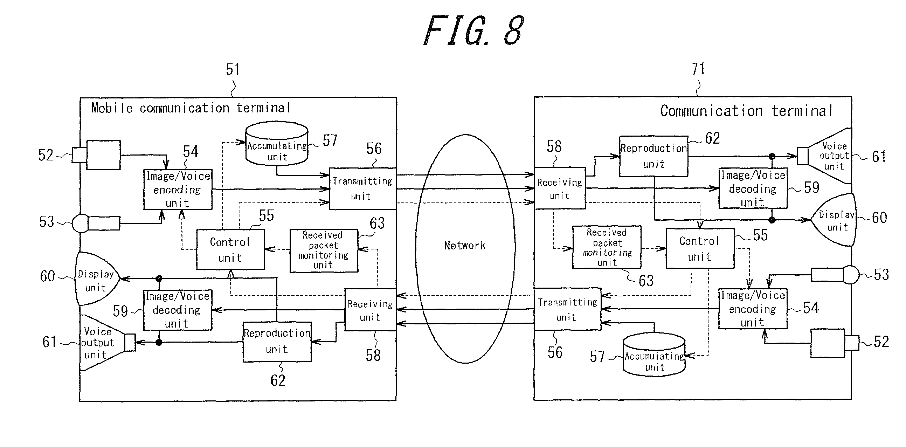

FIG. 8 is a function block diagram illustrating the schematic configuration of the main parts of the mobile communication terminal 51 and the communication terminal 71 shown in FIG.7. These mobile communication terminal 51 and communication terminal 71 have almost the same configuration. Therefore, the configuration of the mobile communication terminal 51 is described below. For the configuration of the communication terminal 71, the same reference numbers are used for the same components as those for the mobile communication terminal 51, and the explanation is omitted.

The mobile communication terminal 51 comprises an image input unit 52, a voice input unit 53, an image/voice encoding unit 54, a control unit 55, a transmitting unit 56 and an accumulating unit 57. Image data obtained by the image input unit 52 or voice data obtained by the voice input unit 53 is converted into image encoded data or voice encoded data by the image/voice encoding unit 54 under control of the control unit 55, then is sent as a packet to the corresponding party by the transmitting unit 56.

The accumulating unit 57 accumulates files such as image, voice, text. The files accumulated in the accumulating unit 57 are sent as packets to the corresponding party by the transmitting unit 56 according to a request to send from the control unit 55.

Further, the mobile communication terminal 51 comprises a receiving unit 58, an image/voice decoding unit 59, a display unit 60, a voice output unit 61, a reproduction unit 62 and a received packet monitoring unit 63. Encoded data (packet) from the corresponding party received by the receiving unit 58 is supplied to the image/voice decoding unit 59, where each data is decoded. Then a decoded image signal is supplied to the display unit 60 to display image and a decoded voice signal is supplied to the voice output unit 61 to output voice.

Further, a file received by the receiving unit 58 is reproduced by the reproduction unit 62 in a reproduction method corresponding to the file. When the reproduction signal is an image signal or the like, it is supplied to the display unit 60 to display, and when the reproduction signal is a voice signal or the like, it is supplied to the voice output unit 61 to output.

Further, (RTP) packets from the corresponding party received by the receiving unit 58 are supplied to the received packet monitoring unit 63, where the band status of the wireless communication path of the wireless network 2 is monitored based on the received packets in the same manner as the first embodiment, and the monitoring result is supplied to the control unit 55. Therefore, in the present embodiment, the received packet monitoring unit 63 constitutes a band status monitoring unit.

The control unit 55 generates a transmission band control message based on the monitoring result from the received packet monitoring unit 63 and sends the generated transmission band control message to the corresponding party through the transmitting unit 56 as in the case of the first embodiment. In other words, when the control unit 55 obtains the monitoring result indicating that the allowable band has become narrow from the received packet monitoring unit 63, it generates a transmission band control message indicating so and sends the message to the corresponding party through the transmitting unit 56, and when the narrow band is recovered, the control unit 55 generates a transmission band control message indicating so and sends the message to through the transmitting unit 56 in the same manner. Therefore, in the present embodiment, the control unit 55 and the transmitting unit 56 constitute a transmission band control message sending unit.

Further, the control unit 55 sends a transmission band control message to the corresponding party and controls the transmission band of the packets to be sent from its own terminal to the corresponding party based on the monitoring result from the received packet monitoring unit 63. In other words, when the monitoring result indicating that the allowable band has become narrow is obtained from the received packet monitoring unit 63 during sending of image data obtained by the image input unit 52 or voice data obtained by the voice input unit 53, the control unit 55 controls the image/voice encoding unit 54 of its own terminal to reduce the encoding rate of the data to be sent or to temporary stop sending. In addition, when the monitoring result indicating that the allowable band has become narrow is obtained during sending of files accumulated in the accumulating unit 57, the control unit 55 controls so that the transfer of file is interrupted. It should be noted that the encoding rate is controlled by the method of changing a quantization table or an encoding method itself, as in the case of the first embodiment.

After that, when the monitoring result indicating recovery of allowable band is obtained from the received packet monitoring unit 63, the control unit 55 sends a transmission band control message indicating so to the corresponding party while controlling the image/voice encoding unit 54 of its own terminal to increase the encoding rate (quality improvement) of the data to be sent or to start sending. In addition, when the transfer of file accumulated in the accumulating unit 57 is interrupted due to a band that has become narrow, the control unit 55 controls so that the transfer of file is restarted.

On the other hand, when a transmission band control message indicating that the allowable band has become narrow is received from the corresponding party, the control unit 55 controls the image/voice encoding unit 54 to reduce the encoding rate of the image data obtained by the image input unit 52 or the voice data obtained by the voice input unit 53, or to temporary stop sending in the same manner. In addition, in the case where the file accumulated in the accumulating unit 57 is being transferred, the control unit 55 controls so that the transfer of file is interrupted.

After that, when a transmission band control message indicating recovery of allowable band is received, the control unit 55 controls the image/voice encoding unit 54 to increase the encoding rate (quality improvement) of the data to be sent or to start sending in the same manner. In addition, when the transfer of file accumulated in the accumulating unit 57 is interrupted due to narrow band, the control unit 55 controls so that the transfer of file is restarted. Therefore, in the present embodiment, the receiving unit 58 constitutes a transmission band control message receiving unit, and the control unit 55 and the image/voice encoding unit 54 constitute a transmission band control unit.

Moreover, in the present embodiment, in the case where each of voice data and image data is sent through respective RTP packets in real time, narrowing of band is monitored with respect to each of the packets. Then, when narrow band is detected in either one of the packets, the encoding rate reduction processing is performed to both of the packets, or the encoding rate reduction processing is performed to either one or both of the packets according to the wireless status (e.g. RSSI) or sending of data is controlled. For example, even though the wireless status is good, when it is detected that the transmission band has become narrow with respect to either one of the packets, a voice packet, for example, the voice packet rate of the corresponding party of the detected packet is reduced, or data sending is stopped. On the other hand, when it is detected that the transmission band of the voice packet has become narrow under deteriorating wireless status, the rates for both voice and image packets are reduced or sending of data is stopped. Further, when a group communication is available with more than one corresponding party, the above mentioned control may be conducted to each of the corresponding parties.

Also in the present embodiment, as in the case of the first embodiment, since the allowable range of the wireless communication path is set and it is detected that the allowable band of the wireless communication path has become narrow based on the comparison between the receiving timing of packets and the allowable range, it is possible to detect that the wireless communication path has become narrow in almost real-time corresponding to the communication method of the wireless communication path. Therefore, the number of packets to be discarded without being reproduced due to a delay in arrival time can be minimized both at the corresponding party and its own terminal for a real-time application by controlling the rate of the packets to be sent from the corresponding party and its own terminal or sending of data based on the detection result.

In addition, in the above mentioned first or second embodiment, for example, when the timing of the received packet is within the allowable range, time difference between the receiving timing and the shortest or longest timing for determining the allowable range is calculated, then the present allowable band is calculated based on the time difference. In the first embodiment, the calculated allowable band is sent to the home video server 4 side as a transmission band control message and the encoding rate of the data to be sent can be increased to the rate corresponding to the allowable band. In the second embodiment, the encoding rate of the data to be sent from the corresponding party or its own terminal can be increased corresponding to the allowable band.

Further, in the second embodiment, specifically when the Frequency Division Duplex (FDD) is adopted, control of the transmission packet rate or control of sending of data at its own terminal based on the monitoring result of the band status at its own terminal can be omitted, then it is possible to control the transmission packet rate or sending of data based on a transmission band control message from the corresponding party.

[Third Embodiment]

According to a third embodiment of the present invention, in the communication system including the mobile communication terminal 1 and the home video server 4 shown in FIGS.1 and 2, the transmission band of packets of a wireless communication path is controlled by monitoring the band status of the wireless communication path using the received packet monitoring unit 15 of the mobile communication terminal 1 as described hereinafter.

In other words, in the present embodiment, the transmission band of packets of a wireless communication path is controlled by setting the monitoring period corresponding to the transmission interval of packets of the wireless communication path of the wireless network 2, monitoring the band status of the wireless communication path based on the receiving timing of the sequential packets within the monitoring period, generating a transmission band control message for controlling the transmission band based on the monitoring result, and sending the transmission band control message to the destination of packets.

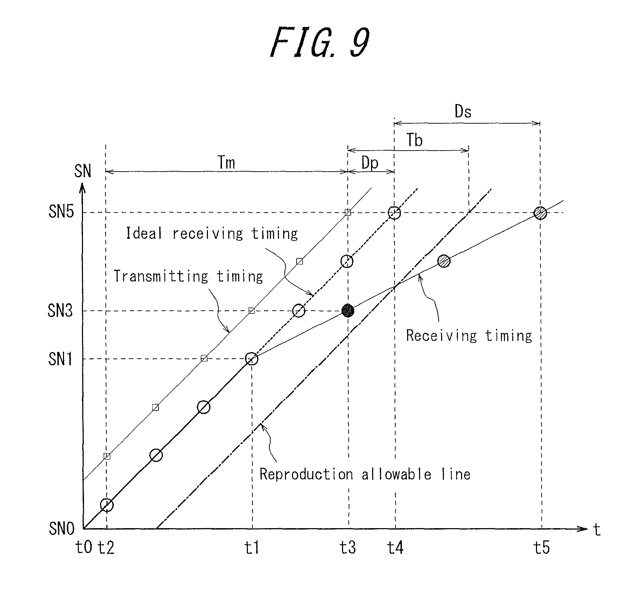

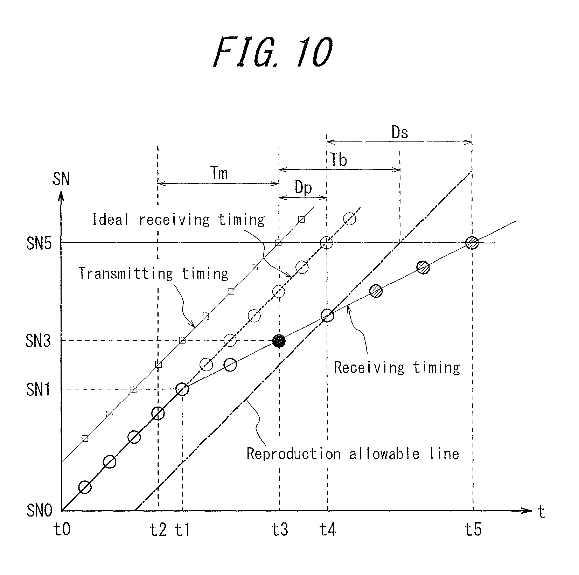

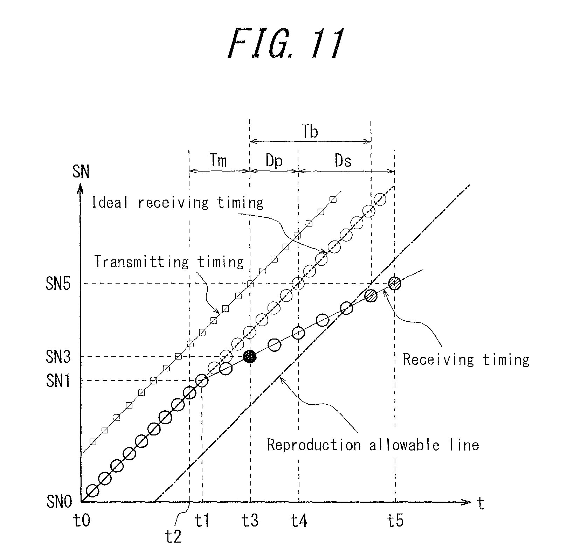

FIGS. 9 to 11 exemplify the monitoring result of the band status according to the present embodiment. In FIG. 9, the packet transmission interval for the application is 80ms. In FIG. 10, the packet transmission interval for the application is 40ms, and in FIG. 11, the packet transmission interval for the application is 20ms. Further, in FIGS.9 to 11, the horizontal axis shows time t and the vertical axis shows sequence number (SN) of packet. In addition, Tm shows monitoring period based on (corresponding to) the transmission interval of packets. Other codes are the same as those shown in FIG. 19. Dp shows potential delay time from the transmission timing of packets to the ideal receiving timing of the path (it is 80ms here), Tb shows reproduction allowable time from the transmission timing of packets (it is 200ms here), and Ds shows retention delay time.

In the present embodiment, the monitoring period Tm corresponding to the transmission interval of the packets to be sent from the home video server 4 is set as a transmission packet period for 5 packets, for example. Then a displacement degree α of the receiving timing of the IP packets received within the monitoring period Tm is calculated from the equation (1) below. Then it is detected that the communication path has become narrow when α≦ α th based on the comparison between the calculated displacement degree α and the threshold α th corresponding to the transmission interval of packet. In addition, in the equation (1), s indicates receiving number allocated to the packets received within the monitoring period Tm, mean indicates averaging processing, SN indicates sequence number of IP packet and trec indicates receiving time.

[Equation 3]

$$\alpha = \underset{s}{mean} \quad (\frac{SN(s+\Delta s)-SN(s)}{t\ rec(s+\Delta s)-t\ rec(s)}) \qquad \cdots (1)$$

In this manner, Tm = 400ms when the packet transmission interval is 80ms in FIG.9. Tm = 200ms when the packet transmission interval is 40ms in FIG.10, and Tm=100ms when the packet transmission interval is 20ms in FIG. 11. In other words, the shorter the packet transmission interval becomes (higher transmission rate), the shorter the Tm becomes. Therefore, when allowable band has become narrow during packet transmission at a high transmission rate, it is possible to effectively reduce the number of packets retained in a communication path by detecting narrow band rapidly. Then even if allowable band has become narrow during packet transmission at a low transmission rate, it is also possible to accurately detect narrow band and effectively reduce the number of packets retained in the communication path.

For example, in FIGS. 9 to 11, assume that the allowable band of the wireless communication path has become narrow to 50% after the time t1 when the packet SN1 is received. In the case where the packet transmission interval is 80ms as shown in FIG.9, assuming that narrow band is detected at the time t3 of the monitoring period Tm (t2 - t3) when the next packet SN3 (black circle) is received, the retention delay time Ds caused by the packets sent until the time t3 is 240ms. Therefore, in this case, the number of packets to be discarded after the reproduction allowable line (shaded circles) is just 2.

In addition, when the packet transmission interval is 40ms in FIG. 10, assuming that narrow band is detected at the time t3 of the monitoring period Tm (t2 - t3) when the second packet SN3 (black circle) is received after the packet SN1 is received at the time t1, the retention delay time Ds caused by the packets sent until the time t3 is 240ms. Therefore, in this case, the number of packets to be discarded after the reproduction allowable line (shaded circles) is just 3.

In the same manner, when the packet transmission interval is 20ms in FIG.11, assuming that narrow band is detected at the time t3 of the monitoring period Tm (t2 - t3) when the second packet SN3 (black circle) is received after the packet SN1 is received at the time t1, the retention delay time Ds caused by the packets sent until the time t3 is 160ms. Therefore, in this case, the number of packets to be discarded after the reproduction allowable line (shaded circles) is just 2.

In this manner, fluctuation of allowable band according to a change in the propagation environment such as fading can be detected in almost real-time corresponding to a communication method of a wireless communication path by setting a monitoring period Tm corresponding to a packet transmission interval, calculating a displacement degree α of a receiving timing of packets received during the monitoring period Tm, and monitoring the band status of the wireless communication path based on the comparison between the calculated displacement degree α and the threshold α th corresponding to the packet transmission interval. Therefore, when narrow band is detected based on the monitoring result, a transmission band control message indicating so is generated and sent to the home video server 4, which is a destination of packets, where an encoding rate of the image data and the voice data to be sent is reduced. Thus the number of packets to be discarded without being reproduced due to a delay in arrival time for a real-time application can be minimized.

[Fourth Embodiment]

According to a fourth embodiment of the present invention, in a communication system including the mobile communication terminal 51 and the communication terminal 71 according to the second embodiment shown in FIGS.7 and 8, the received packet monitoring unit 63 of each of the mobile communication terminal 51 and the communication terminal 71 monitors the band status of the wireless communication path of the wireless network 2 based on the packets received by the corresponding receiving unit 58, as in the case of the third embodiment. Then the monitoring result is supplied to the corresponding control unit 55.

Each control unit 55, as in the case of the third embodiment, generates a transmission band control message based on the monitoring result from the received packet monitoring unit 63, and sends the generated transmission band control message to the corresponding party through the receiving unit 56. In other words, when the monitoring result indicating that the allowable band has become narrow is obtained at the received packet monitoring unit 63, the control unit 55 generates a transmission band control message indicating so and sends it to the corresponding party. Then when the narrow band is recovered, in the same way, the control unit 55 generates a transmission band control message indicating so and sends it to the corresponding party. Other operations are the same as those shown in the second embodiment. Therefore its explanation is omitted.

Also in the present embodiment, as in the case of the third embodiment, since the band status of a wireless communication path is monitored by setting a monitoring period Tm corresponding to a packet transmission interval, calculating a displacement degree $\alpha$ of a receiving timing of the packets received within the monitoring period Tm, and comparing the calculated displacement degree $\alpha$ with the threshold $\alpha$ th corresponding to the packet transmission interval, it is possible to detect that the wireless communication path has become narrow in almost real time and accurately corresponding to the communication method of the wireless communication path. Therefore, the number of packets to be discarded without being reproduced due to a delay in arrival time can be minimized for a real time application both at the corresponding party and its own terminal by controlling the rate of the packets to be sent from the corresponding party and its own terminal or sending of data based on the monitoring result.

In addition, in the above mentioned third and fourth embodiments, an average value of the receiving timing difference between the sequential packets is calculated as a displacement degree $\alpha$ . However, the displacement degree $\alpha$ , in this case, becomes more critical as it closes to the present time. Therefore, it is also possible to calculate it by averaging processing by increasing a weight coefficient as it closes to the present time. Further, since one or two received packets may deviate from the ideal receiving timing too much, a threshold $\alpha$ th can be changed according to the number of packets deviated too much. That is, the threshold $\alpha$ th is increased as the number of packets received outside the ideal receiving timing increases. In this manner, a wrong detection can be prevented. In addition, in this case, for example, it is also possible to set a threshold $\alpha$ th based on the smallest gradient obtained by calculating the statistic amount of the receiving time difference between the sequential received packets. Further, it is also possible to set a threshold $\alpha$ th based on the smallest value of the receiving time difference between the sequential received packets or the smallest value of the receiving time difference between every two or every three received packets or the like.

In addition, when the displacement degree $\alpha$ is greater than the threshold $\alpha$ th, the transmission band can be controlled wider than that of the present time (higher transmission rate) based on the difference. Further, in the fourth embodiment, specifically in the case where the Frequency Division Duplex (FDD) is adopted, control of rate of transmission packet or control of sending of data at its own terminal based on the band status monitoring result at its own terminal can be omitted. Then, it is possible to control the rate of transmission packet or sending of data based on a transmission band control message sent from the corresponding party.

Further, in the case where a monitoring period is corresponded to a packet transmission interval, the band status can be monitored by monitoring the number of received packets within the monitoring period and comparing the number of received packets with the number of packets scheduled to be received (threshold) corresponding to the packet transmission interval without calculating a displacement degree as in the case of the third and fourth embodiments.

[Fifth Embodiment]

A fifth embodiment according to the present invention is described hereinafter.

[Overall schematic configuration of communication system]

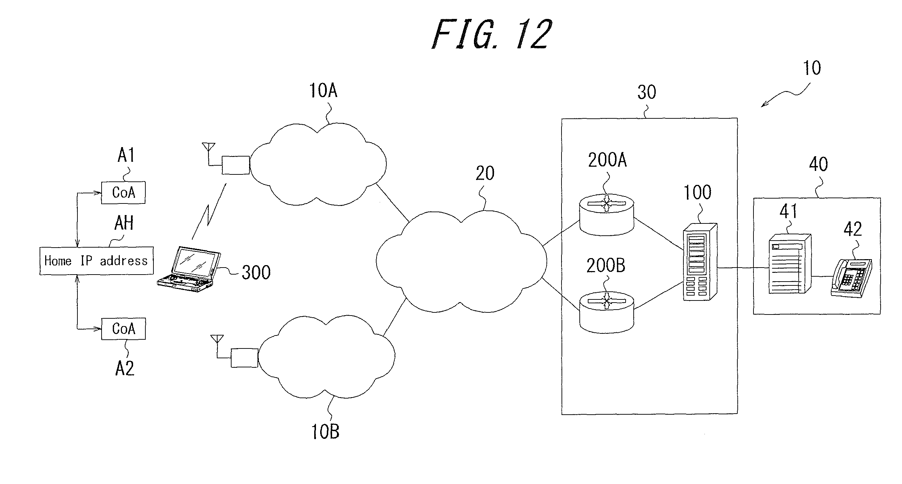

FIG. 12 is an overall schematic diagram of the communication system 10 according to a fifth embodiment of the present invention. As shown in FIG. 12, the communication system 10 includes a wireless IP network 10A and a wireless IP network 10B. The wireless IP network 10A (a first wireless IP network) is an IP network that can transmit IP packets. According to the location of wireless communication apparatus 300 (hereinafter abbreviated as MN300), the wireless IP network 10A dynamically allocates a care-of IP address A1 (a first care-of IP address) to the MN300. In the present embodiment, the wireless IP network 10A is a cellular phone network that employs a CDMA (specifically, it is HRPD of the 3GPP2 standard) as a wireless communication method.

The wireless IP network 10B (a second wireless IP network) can transmit IP packets in the same manner as the wireless IP network 10A. The wireless IP network 10B allocates an IP address A2 (a second care-of IP address) to the MN300. In the present embodiment, the wireless IP network 10B employs a mobile WiMAX complying with the standard of IEEE802.16e as a wireless communication method.

In addition, the care-of IP address A1 is given by the wireless IP network 10A when the MN300 is connected to the wireless IP network 10A. In the same manner, the care-of IP address A2 is given by the wireless IP network 10B when the MN300 is connected to the wireless IP network 10B.

In the present embodiment, the care-of IP address A1 and the care-of IP address A2 are associated with a home IP address AH (virtual address).

The switching server 100 and the MN300 can perform communication by using the wireless IP networks 10A and 10B simultaneously. More specifically, the switching server 100 and the MN300 send and receive IP packets by using the wireless IP network 10A as a master path. Then when the band (transfer speed) of the master path is insufficient, the insufficient band is compensated with a slave path by using the wireless IP network 10B as a slave path.

The wireless IP networks 10A and 10B are connected to the Internet 20. A relay center 30 is connected to the Internet 20.

The relay center 30 is provided with a network apparatus that relays IP packets that are sent and received by the MN300. More specifically, the relay center 30 is provided with a switching server 100 and VPN routers 200A and 200B.

The switching server 100 controls a wireless communication path for the MN300. In the present embodiment, the switching server 100 constitutes a communication control apparatus. More specifically, the switching server 100 can send IP packets to the MN300 through the wireless IP network 10A while sending IP packets to the MN300 through the wireless IP network 10B.

The VPN routers 200A and 200B perform routing of IP packets. In addition, the VPN routers 200A and 200B establish a VPN (IPSec) tunnel between the MN300 and the switching server 100. Virtualization of the third layer of OSI can be realized by establishing the tunnel. Thus IP mobility of the MN300 can be secured.

In other words, in the present embodiment, different from the mobile IP (e.g. RFC2002), the MN300 can perform communication with the corresponding party (specifically, IP phone terminal 42) by using both master path set through the wireless IP network 10A and slave path set through the wireless IP network 10B simultaneously.

The relay center 30 (switching server 100) is connected to a user premise 40 through a predetermined communication network (not shown). The user premise 40 is provided with an IP phone switching unit 41 and an IP phone terminal 42. The IP phone switching unit 41 relays IP packets (specifically VoIP packets) between the predetermined communication network and the IP phone terminal 42. The IP phone terminal 42 mutually exchanges voice signals and VoIP packets and sends and receives IP packets.

In other words, in the present embodiment, the MN300 (wireless communication apparatus) performs communication with the IP phone terminal 42 (the corresponding party) through the switching server 100 (communication control apparatus).

Next, a function block configuration of the communication system 10 is described. More specifically, a function block configuration of the switching server 100 and the MN300 included in the communication system 10 is described. Hereinafter, the portions relating to the present invention are mainly described. Therefore, it should be noted that the switching server 100 and the MN300 may be provided with a logic block (power source or the like) that is essential to achieve the functions as the apparatus, but is not shown or not explained herein.

[Function block configuration of switching server 100]

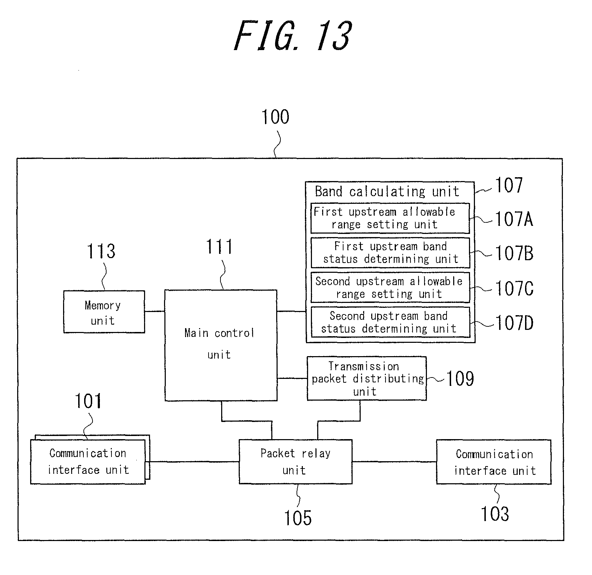

FIG.13 shows a function block configuration diagram of the switching server 100. As shown in FIG.13, the switching server 100 comprises a communication interface unit 101, a communication interface unit 103, a packet relay unit 105, a band calculating unit 107, a transmission packet distributing unit 109, a main control unit 111 and a memory unit 113.

The communication interface unit 101 is connected to the VPN routers 200A and 200B. The communication interface 101 can be composed of, for example, a 1000 BASE-T defined by the IEEE802.3ab.

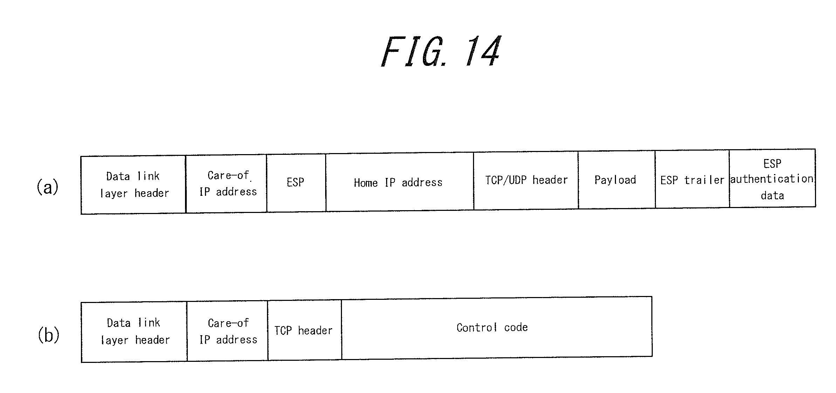

In addition, as described above, in the present embodiment, VPN by using IP Sec is set. Therefore, the IP packets sent and received by the communication interface unit 101, specifically, VoIP packets sent and received between the switching server 100 and the MN300 (more specifically, VoIP packets sent by the MN300) has a configuration as shown in FIG.14 (a). As shown in FIG.14 (a), a home IP header (a home IP address AH), a TCP/UDP header and a payload are encapsulated, to which a care-of IP address (a care-of IP address A1 or a care-of IP address A2) is added.

Further, access control packets sent and received between the switching server 100 and the MN300 have a configuration as shown in FIG.14(b). The access control packet is composed of a data link layer header, a care-of IP address, a TCP header and a control code.

The communication interface unit 103 is used for performing communication between the IP phone switching unit 41 and the IP phone terminal 42.

The packet relay unit 105 relays IP packets sent and received by the communication interface units 101 and 103. More specifically, the packet relay unit 105 relays IP packets following a direction from the transmission packet distributing unit 109 or the main control unit 111. In addition, the packet relay unit 105 comprises a jitter buffer that absorbs jitters of IP packets received by the communication interface units 101 and 103.

Moreover, in the present embodiment, the packet relay unit 105 constitutes a relay unit that receives IP packets (VoIP packets) sent from the MN300 to the IP phone terminal 42 at a predetermined cycle (20ms) and relays them to the IP phone terminal 42 while receiving IP packets (VoIP packets) sent from the IP phone terminal 42 to the MN300 at the predetermined cycle (20ms) and relaying them to the MN300.

A band calculating unit 107 calculates the band (transfer speed) of the wireless IP networks 10A and 10B required for receiving IP packets from the MN300, and comprises a first upward allowable range setting unit 107A, a first upward band status determining unit 107B, a second upward allowable range setting unit 107C and a second upward band status determining unit 107D.

The first upward allowable range setting unit 107A sets a first upward allowable range indicating an allowable receiving timing range of IP packets to be received through the wireless IP network 10A. In addition, the first upward band status determining unit 107B determines the upward band status of the wireless IP network 10A based on the comparison between the first upward allowable range set by the first upward allowable range setting unit 107A and the receiving timing of the packets received through the wireless IP network 10A.

More specifically, the first upward allowable range setting unit 107A sets a first upward allowable range from the ideal receiving timing of VoIP packet of the wireless IP network 10A. Then the first upward band status determining unit 107B detects whether or not the receiving timing of the VoIP packets actually received through the wireless IP network 10A is within the set first upward allowable range. As a result of that, whether the present upward transmission band (band allocation rate) of the VoIP packets to be sent by the MN300 to the wireless IP network 10A is good or defective is determined. In this case, it is determined as good if the receiving timing of the VoIP packet is within the first upward allowable range, and if not, it is determined as defective.

In the same manner, the second upward allowable range setting unit 107C sets a second upward allowable range indicating an allowable receiving timing range of the IP packets to be received through the wireless IP network 10B. In addition, the second upward band status determining unit 107D determines the upward band status of the wireless IP network 10B based on the comparison between the second upward allowable range set by the second upward allowable range setting unit 107C and the receiving timing of the packets received through the wireless IP network 10B.

More specifically, the second upward allowable range setting unit 107C sets a second upward allowable range from an ideal receiving timing of VoIP packets of the wireless IP network 10B. Then the second upward band status determining unit 107D detects whether or not the receiving timing of the VoIP packets actually received through the wireless IP network 10B is within the set second upward allowable range. As a result of that, whether the present upward transmission band (band allocation rate) of the VoIP packets to be sent by the MN300 to the wireless IP network 10B is good or defective is determined. In this case, it is determined as good if the receiving timing of the VoIP packet is within the second upward allowable range, and if not, it is determined as defective.

The setting method of these first and second upward allowable ranges and the upward band stats determination method of the wireless IP networks 10A and 10B are described hereinafter.

The transmission packet distributing unit 109 distributes the IP packets sent from the communication interface unit 101 through the packet relay unit 105 to the wireless IP networks 10A and 10B.

More specifically, the transmission packet distributing unit 109 adds a care-of IP address A1 to the IP packet that includes a home IP address AH received from the IP phone terminal 42 based on a transmission band control message (first downward transmission control information) of the wireless IP network 10A that was received by the main control unit 111 from the MN300. Then the IP packet having the added care-of IP address A1 is sent from the communication interface unit 101 to the wireless IP network 10A.

Further, the transmission packet distributing unit 109 adds a care-of IP address A2 to the IP packet that includes a home IP address AH received from the IP phone terminal 42 based on a transmission band control message (a second downward transmission control information) of the wireless IP network 10B that was received by the main control unit 111 from the MN300. Then the IP packet having the added care-of IP address A2 is sent from the communication interface unit 101 to the wireless IP network 10B.

The main control unit 111 controls a wireless communication path for the IP packets to be sent to the MN300 and to be received from the MN300. Further, the main control unit 111 performs processing of access control packets.

In particular, in the present embodiment, the main control unit 111 generates a transmission band control message (the first upward transmission control information) for controlling the transmission band of the VoIP packets to be sent by the MN300 to the wireless IP network 10A based on the determination result of the upward band status of the wireless IP network 10A by the first upward band status determining unit 107B of the band calculating unit 107, and sends the transmission band control message to the MN300 through the wireless IP network 10A or 10B. More specifically, when the first upward band status determining unit 107B determines that the present transmission band is defective, the main control unit 111 controls so that the band allocation rate of the VoIP packets to be sent by the MN300 to the wireless IP network 10A is reduced (slower transmission band). When the present transmission band is determined as good, the main control unit 111 generates a transmission band control message for maintaining the transmission band and sends it to the MN300. It should be noted that the transmission band control message is sent and received by using access control packets (refer to FIG.14 (b)).

In the same manner, the main control unit 111 generates a transmission band control message (the second upward transmission control information) for controlling the transmission band of the VoIP packets to be sent by the MN300 to the wireless IP network 10B based on the determination result of the upward band status of the wireless IP network 10B by the second upward band status determining unit 107D of the band calculating unit 107, and sends the transmission band control message to the MN300 through the wireless IP network 10B or the wireless IP network 10A.

More specifically, when the second upward band status determining unit 107D determines that the present transmission band is defective, the main control unit 111 controls so that the band allocation rate of the VoIP packets to be sent by the MN300 to the wireless IP network 10B is reduced (slower transmission band). Then when the present transmission band is determined as good, the main control unit 111 generates a transmission band control message for maintaining the transmission band and sends it to the MN300.

Further, the main control unit 111 has a function of calculating the transmission band of the VoIP packets to be sent to the wireless IP network 10B based on a transmission band control message (the first downward transmission control information) to the wireless IP network 10A received from the MN300 as well as a function of calculating the transmission band of the VoIP packets to be sent to the wireless IP network 10A based on a transmission band control message (the second downward transmission control information) to the wireless IP network 10B received from the MN300. In the present embodiment, the main control unit 111 constitutes a first upward transmission control unit and a second upward transmission control unit.

In addition, the main control unit 111 checks an order of IP packets received through the wireless IP networks 10A and 10B. In the present embodiment, the main control unit 111 checks a sequence number (SN) of RTP (real-time transport protocol) included in the VoIP packet sent and received between the MN300 and the IP phone terminal 42. Further, the main control unit 111 can obtain statistical information (e.g. packet loss, throughput, and underrun count and overrun count of jitter-buffer) of the IP packets that are relayed by the packet relay unit 105 and transmit the obtained information to the MN300.

The memory unit 113 stores application program or the like that provides functions of the switching server 100. In addition, the memory unit 113 also stores information related to network such as the wireless IP networks 10A and 10B.

In particular, in the present embodiment, the memory unit 113 stores a home IP address AH of the MN300 associated with a care-of IP address A1 and a care-of IP address A2. More specifically, the main control unit 111 stores the care-of IP address A1, the care-of IP address A2 and the home IP address AH notified by the MN300 in the memory unit 113. In the present embodiment, the main control unit 111 and the memory unit 113 constitute a virtual address acquisition unit.

Further, the main control unit 111 can verify a home IP address AH included in the IP packets sent by the IP phone terminal 42 with respect to a home IP address registered in a home agent (not shown) that is accessible through the Internet 20. Through this verification by the main control unit 111, it is possible to determine which telecommunication carrier allocates the home IP address AH to the MN300.

[Function block configuration of MN300]

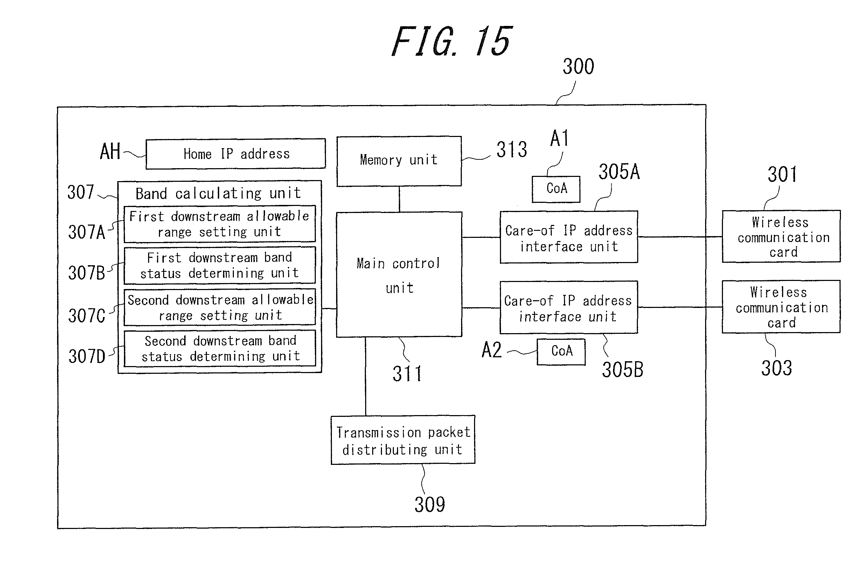

FIG. 15 is a function block configuration of the MN300. In the same manner as the switching server 100, the MN300 can perform communication by using the wireless IP networks 10A and 10B simultaneously. Explanation of the function block similar to those described for the switching server 100 is occasionally omitted.

As shown in FIG.15, the MN300 comprises a wireless communication card 301, a wireless communication card 303, a care-of IP address interface unit 305A, a care-of IP address interface unit 305B, a band calculating unit 307, a transmission packet distributing unit 309, a main control unit 311 and a memory unit 313.

The wireless communication card 301 performs wireless communication of the wireless communication method (HRPD of the 3GPP2 standard) employed by the wireless IP network 10A. In the present embodiment, the wireless communication card 301 sends and receives IP packets (VoIP packet) to and from the IP phone terminal 42 at a predetermined cycle (e.g. 20ms) through the wireless IP network 10A.

The wireless communication card 303 performs wireless communication complying with the wireless communication method (mobile WiMAX) employed by the wireless IP network 10B.

The care-of IP address interface unit 305A is connected to the wireless communication card 301. The care-of IP address interface unit 305A sends and receives IP packets based on the care-of IP address A1 allocated to the MN300 in the wireless IP network 10A.

The care-of IP address interface unit 305B is connected to the wireless communication card 303. The care-of IP address interface unit 305B sends and receives IP packets based on the care-of IP address A2 allocated to the MN300 in the wireless IP network 10B.

The band calculating unit 307 calculates the band (transfer speed) of the wireless IP networks 10A and 10B required for receiving the IP packets from the switching server 100 and comprises a first downward allowable range setting unit 307A, a first downward band status determining unit 307B, a second downward allowable range setting unit 307C and a second downward band status determining unit 307D. The detailed functions of the band calculating unit 307 are almost the same as those of the above described band calculating unit 107.

In other words, the first downward allowable range setting unit 307A sets a first downward allowable range indicating an allowable receiving timing range for the IP packets to be received through the wireless IP network 10A. In addition, the first downward band status determining unit 307B determines the downward band status of the wireless IP network 10A based on the comparison between the first downward allowable range set by the first downward allowable range setting unit 307A and the receiving timing of the packets received through the wireless IP network 10A.

More specifically, the first downward allowable range setting unit 307A sets a first downward allowable range from an ideal receiving timing of the VoIP packets in the wireless IP network 10A. Then the first downward band status determining unit 307B detects whether or not the receiving timing of the VoIP packets actually received through the wireless IP network 10A is within the set first downward allowable range. As a result of that, whether the present downward transmission band (band allocation rate) of the VoIP packets to be sent by the switching server 100 to the wireless IP network 10A is good or defective is determined. In this case, it is determined as good if the receiving timing of the VoIP packets is within the first downward allowable range, and if not, it is determined as defective.

In the same manner, the second downward allowable range setting unit 307C sets a second downward allowable range indicating an allowable receiving timing range of the IP packets to be received through the wireless IP network 10B. In addition, the second downward band status determining unit 307D determines the downward band status of the wireless IP network 10B based on the comparison between the second downward allowable range set by the second downward allowable range setting unit 307C and the receiving timing of the packets received through the wireless IP network 10B.

More specifically, the second downward allowable range setting unit 307C sets a second downward allowable range from an ideal receiving timing of the VoIP packets in the wireless IP network 10B. Then the second downward band status determining unit 307D detects whether or not the receiving timing of the VoIP packets actually received through the wireless IP network 10B is within the set second downward allowable range. As a result of that, whether the present downward transmission band (band allocation rate) of the VoIP packets to be sent by the switching server 100 to the wireless IP network 10B is good or defective is determined. In this case, it is determined as good if the receiving timing of the VoIP packets is within the second downward allowable range, and if not, it is determined as defective.

A setting method of these first and second downward allowable ranges and a downward band status determination method of the wireless IP networks 10A and 10B are described hereinafter.

The transmission packet distributing unit 309 generates an IP packet including a home IP address AH and a care-of IP address A1 based on a transmission band control message (the first upward transmission control information) that are received by the main control unit 311 from the switching server 100. The generated IP packet is sent from the main control unit 311 to the wireless IP network 10A through the care-of IP address interface unit 305A and the wireless communication card 301.

Further, the transmission packet distributing unit 309 generates an IP packet including a home IP address AH and a care-of IP address A2 based on a transmission band control message (the second upward transmission control information) that are received by the main control unit 311 from the switching server 100. The generated IP packet is sent from the main control unit 311 to the wireless IP network 10B through the care-of IP address interface unit 305B and the wireless communication card 303.

The main control unit 311 controls a wireless communication path for the IP packets to be sent to the switching server 100 and the IP packets to be received from the switching server 100 in the same manner as the main control unit 111 (refer to FIG.13) of the switching server 100. In addition, the main control unit 311 performs processing of access control packets.

In the present embodiment, the main control unit 311 generates a transmission band control message (the first downward transmission control information) for controlling the transmission band of the VoIP packets to be by the switching server 100 to the wireless IP network 10A based on the determination result of the downward band status of the wireless IP network 10A by the first downward band status determining unit 307B of the band calculating unit 307, and sends the transmission band control message to the switching server 100 through the wireless IP network 10A or 10B. More specifically, when the first downward band status determining unit 307B determines that the present transmission band is defective, the control unit 311 controls so that the band allocation rate of the VoIP packets to be sent by the switching server 100 to the wireless IP network 10A is reduced. Then when the present transmission band is determined as good, the control unit 311 generates a transmission band control message for maintaining the transmission band and sends it to the switching server 100.

In the same manner, the main control unit 311 generates a transmission band control message (the second downward transmission control information) for controlling the transmission band of the VoIP packets to be sent by the switching server 100 to the wireless IP network 10B based on the determination result of the downward band status of the wireless IP network 10B by the second downward band status determining unit 307D of the band calculating unit 307, and sends the transmission band control message to the switching server 100 through the wireless IP network 10B or 10A. More specifically, when the second downward band status determining unit 307D determines that the present transmission band is defective, the control unit 311 controls so that the band allocation rate of the VoIP packets to be sent by the switching server 100 to the wireless network 10B is reduced, and when the present transmission band is determined as good, the control unit 311 generates a transmission band control message for maintaining the transmission band and sends it to the switching server 100.

Further, the main control unit 311 has a function of calculating the transmission band of the VoIP packets to be sent to the wireless IP network 10B based on a transmission band control message (the first upward transmission control information) to the wireless IP network 10A received from the switching server 100 as well as a function of calculating the transmission band of the VoIP packets to be sent to the wireless IP network 10A based on a transmission band control message (the second upward transmission control information) to the wireless IP network 10B received from the switching server 100. In the present embodiment, the main control unit 311 constitutes a first downward transmission control unit and a second downward transmission control unit.

In addition, as in the case of the main control unit 111 of the switching server 100, the main control unit 311 checks a sequence number (SN) of RTP (real-time transport protocol) included in the VoIP packets to be sent and received to and from the IP phone terminal 42. Further, the main control unit 311 can obtain information indicating a quality of the wireless communication performed at the wireless communication cards 301 and 303 (e.g. throughput, SINR, RSSI, DRC and transmission power) and estimate the band (downward and upward) of the wireless IP networks 10A and 10B required for communication based on the obtained information.

The memory unit 313 stores application program or the like that provides functions of MN300. Further, the memory unit 313 stores a home IP address AH for the MN300 that is associated with a care-of IP address A1 and a care-of IP address A2. In this embodiment, the memory unit 313 constitutes a virtual address memory unit.

[Setting method of allowable range and determination method of band status]

Next, a setting method of upward and downward allowable bands and a determination method of band status with respect to each of the above mentioned wireless IP networks 10A and 10B are described.

In the present embodiment, as in the case of the first embodiment, each of the switching server 100 and the MN300 sets an allowable range from an ideal receiving timing of packets of a wireless communication path based on the receiving timing of the packets received through each wireless communication path, detects whether or not the receiving timing of the packets received through the wireless communication path is within the set allowable range, determines whether or not the present band status is appropriate, generates a transmission band control message for controlling the transmission band based on the determination result, and sends the transmission band control message to the destination of packets. Thus the transmission band of the packets for the wireless communication path is controlled.

Here, as described above, in the present embodiment, IP packets are sent and received by using the wireless IP networked 10A as a master path. When the band (transfer speed) of the master path is insufficient, the wireless IP network 10B is compensated with a slave path by using the wireless IP network 10B as a slave path. Therefore, for example, as shown in FIG.19, assuming that the VoIP packets to be sent at a 20ms interval are received, in the case where the band allocation rate of the master path or the slave path is 25%, the packet transmission interval of the path is 80ms as shown in FIG.3. Therefore, when the band allocation rate is 50%, the packet transmission interval of the path is 40ms as shown in FIG.4. Then when the band allocation rate is 100%, the packet transmission interval of the path is 20ms as shown in FIG.5.

Under the transmission status at the band transmission rates shown in FIGS.3 to 5, assume that the allowable band of the wireless communication path has become narrow to 50% after the time t1 when the packet SN1 is received. In this case, when the band allocation rate is 25% as shown in FIG.3, as in the case of the first embodiment, the receiving timing of the packet SN3 is outside the allowable range Tp at the time t3 when the next packet SN3 (black circle) is received. Therefore, it is detected that the wireless communication path has become narrow at the time t3. Thus the transmission band (band allocation rate) can be determined as inappropriate. In addition, the retention delay time Ds caused by the packets sent until the time t3 is 240ms. Therefore, in this case, the number of packets to be discarded after the reproduction allowable line (shaded circle in the figure) is just 2.

In FIG. 4 where a band allocation rate is 50%, as in the case of the first embodiment, the receiving timing of the packet SN3 (black circle) is outside the allowable range Tp at the time t3 when the second packet SN3 is received after the packet SN1 is received at the time t1. Therefore, it is detected that the wireless communication path has become narrow at the time t3. Thus the transmission band (band allocation rate) can be determined as inappropriate. Further, the retention delay time Ds caused by the packets sent until the time t3 is 240ms. Therefore, in this case, the number of packets to be discarded after the reproduction allowable line (shaded circles in the figure) is just 3.

In the same manner, in FIG. 5 where a band allocation rate is 100%, as in the case of the first embodiment, the receiving timing of the packet SN3 is outside the allowable range Tp at the time t3 when the fourth packet SN3 (black circle) is received after the packet SN1 is received at the time t1. Therefore, it is detected that the wireless communication path has become narrow at the time t3. Thus the transmission band (band allocation rate) can be determined as inappropriate. Further, the retention delay time Ds caused by the packets sent until the time t3 is 240ms. Therefore, in this case, the number of packets to be discarded after the reproduction allowable line (shaded circles) is just 6.

In addition, in the present embodiment, for the switching server 100, the allowable range Tp shown in FIGS.3 to 5 is equivalent to the first upward allowable range of the wireless IP network 10A or the second upward allowable range of the wireless IP network 10B. For the MN300, the allowable range Tp is equivalent to the first downward allowable range of the wireless IP network 10A or to the second downward allowable range of the wireless IP network 10B.

In this manner, fluctuation of allowable band according to a change in the propagation environment such as fading can be detected in almost real time in accordance with a communication method of each wireless communication path by setting an allowable range Tp for each of upward and downward directions of the wireless IP networks 10A and 10B and by determining that the allowable band of the wireless communication path has become narrow when the receiving timing is outside the allowable range Tp based on the comparison between the allowable range Tp and the receiving timing of packets in the switching server 100 and the MN300. Therefore, the number of packets to be discarded without being reproduced due to a delay in arrival rime can be minimized for a real-time application such as VoIP by controlling a transmission band of a wireless communication path by generating a transmission band control message for controlling the transmission band based on the determination result and by sending the transmission band control message to the destination of packets, that is, the MN300 with respect to the switching server 100, and the switching server 100 with respect to the MN300, to control the transmission band of the wireless communication path.

[Operation of communication system]

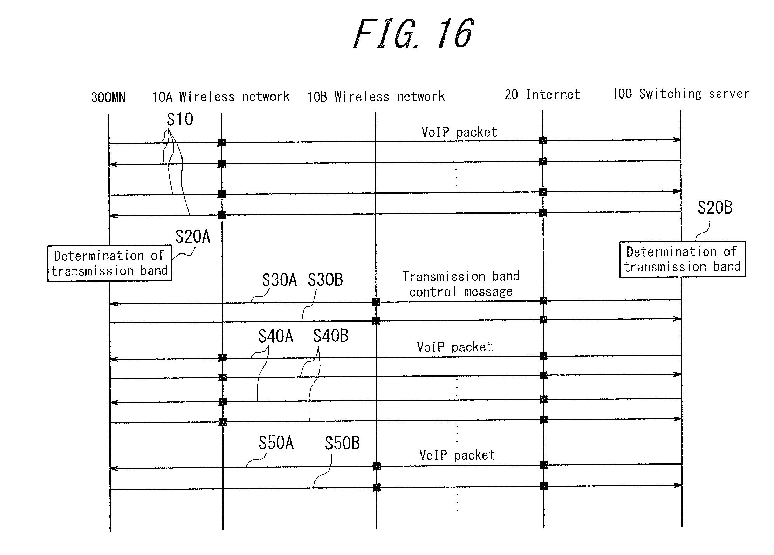

Next, operation of the above mentioned communication system is described with reference to FIG.16. FIG. 16 is a communication sequence diagram performed between the switching server 100 and the MN300. As shown in FIG. 16, in step S10, the switching server 100 and the MN300 sends and receives VoIP packets through the wireless IP network 10A (master path) and the Internet 20. VoIP packets are sent and received along with voice communication between the MN300 and the IP phone terminal 42 (see FIG. 12).

More specifically, the MN300 sends an IP packet, in which an payload including an IP address allocated to the IP phone terminal 42 and a home IP address AH are encapsulated, and a care-of IP address A1 is used as a sender address (see FIG. 14(a)).

In addition, the switching server 100 sends an IP packet, in which an VoIP packet sent by the IP phone terminal 42 is encapsulated and a care-of IP address A1 is used as a destination address.

At the beginning of communication start through the wireless IP network 10A, the switching server 100 sets a first upward allowable range of the wireless IP network 10A by the first upward allowable range setting unit 107A of the band calculating unit 107, and the MN300 sets a first downward allowable range of the wireless IP network 10A by the first downward allowable range setting unit 307A of the band calculating unit 307.

In addition, the "black squares" in the figure are marked on the network through which the VoIP packets are routed (the same will be applied below). In step S10, all VoIP packets are routed through the wireless IP network 10A (master path) and the Internet 20.

After that, in step S20A, the MN300 determines good or defective of the present transmission band by detecting whether or not the receiving timing of the VoIP packets actually received through the wireless IP network 10A is within the first downward allowable range set by the first downward allowable range setting unit 307A by using the first downward band status determining unit 307B of the band calculating unit 307. Further, in step S20B, the switching server 100 determines good or defective of the present transmission band by detecting whether or not the receiving timing of the VoIP packets actually received through the wireless IP network 10A is within the first upward allowable range set by the first upward allowable range setting unit 107A by using the first upward band status determining unit 107B of the band calculating unit 107.

In step S30A, in the case where the first upward band status determining unit 107B determines that the present transmission band is defective, the switching server 100 generates a transmission band control message (the first upward transmission control information) for controlling the transmission band so that the band allocation rate of the VoIP packets to be sent by the MN300 to the wireless IP network 10A is reduced and sends it to the MN300.

In step S30B, in the case where the first downward band status determining unit 307B determines that the present transmission band is defective, the MN300 generates a transmission band control message (the first downward transmission control information) for controlling the transmission band so that the band allocation rate of the VoIP packets to be sent by the switching server 100 to the wireless IP network 10A is reduced and sends it to the switching server 100.

In step S40A, the switching server 100 controls the transmission band of the VoIP packets to be sent to the wireless IP network 10A based on a transmission band control message (the first downward transmission control information) received from the MN300 and sends the VoIP packets to the wireless IP network 10A.

In step S40B, the MN300 controls the transmission band of the VoIP packets to be sent to the wireless IP network 10A based on a transmission band control message (the first upward transmission control information) received from the switching server 100 and sends the VoIP packets to the wireless IP network 10A.

In step S50A, the switching server 100 calculates the transmission band of the VoIP packets to be sent to the wireless IP network 10B, which is a slave path, based on a transmission band control message (the first downward transmission control information) received from the MN300 and sends the VoIP packets to the wireless IP network 10B based on the calculated transmission band.

In step S50B, the MN300 calculates the transmission band of the VoIP packets to be sent to the wireless IP network 10B, which is a slave path, based on a transmission band control message (the first upward transmission control information) received from the switching server 100 and sends the VoIP packets to the wireless IP network 10B based on the calculated transmission band.

In these steps S50A and S50B, the VoIP packets are routed through the wireless IP network 10B and the Internet 20. In other words, insufficient band of the wireless IP network 10A is compensated with the wireless IP network 10B.

At the beginning of communication start for compensation through the wireless IP network 10B, in switching server 100, a second upward allowable range of the wireless IP network 10B is set by the second upward allowable range setting unit 107C of the band calculating unit 107, and in the MN300, the second downward allowable range of the wireless IP network 10B is set by the second downward allowable range setting unit 307C of the band calculating unit 307.

After that, to the wireless IP network 10B, the switching server 100 determines whether the present transmission band is good or defective based on the comparison between the receiving timing and the set second upward allowable range each time a VoIP packet is received, generates a transmission band control message (the second upward transmission control information) based on the determination result and sends it to the MN300. In addition, the MN300 determines whether the present transmission band is good or defective based on the comparison between the receiving timing and the set second downward allowable range each time a VoIP packet is received, generates a transmission band control message (the second downward transmission control information) based on the determination result and sends it to the switching server 100.

Thus, the switching server 100 distributes the VoIP packets received from the IP phone terminal 42 to the wireless IP network 10B based on the transmission band control message (the second downward transmission control information) received from the MN300, and sends the VoIP packets thereto. In addition, the MN300 distributes the VoIP packets to the wireless IP network 10B based on the transmission band control message (the second upward transmission control information) received from the switching server 100 and sends the VoIP packets thereto.

In the same manner, to the wireless IP network 10A, which is a master path, the switching server 100 determines whether the present transmission band is good or defective based on the comparison between the receiving timing and the set first upward allowable range each time a VoIP packet is received, generates a transmission band control message (the first upward transmission control information) based on the determination result and sends it to the MN300. In addition, the MN300 determines good or defective of the present transmission band based on the comparison between the receiving timing and the set first downward allowable range each time a VoIP packet is received, generates a transmission band control message (the first downward transmission control information) based on the determination result and sends it to the switching server 100.

Thus, the switching server 100 distributes the VoIP packets received from the IP phone terminal 42 to the wireless IP network 10A based on the transmission band control message (the first downward transmission control information) received from the MN300 and sends the VoIP packets thereto. In addition, the MN300 distributes the VoIP packets to the wireless IP network 10A based on the transmission band control message (the first upward transmission control information) received from the switching server 100 and sends the VoIP packets thereto.

Moreover, a plurality of transmission bands (band allocation rate) for control are previously prepared, for example, in the switching server 100 and the MN300 respectively. Then, each time a transmission band control message for reducing a band allocation rate is received, a band allocation rate is sequentially selected in ascending order, beginning with the lowest rate.

As mentioned above, according to the switching server 100 of the present embodiment, since VoIP packets are allocated to the wireless IP networks 10A and 10B based on a transmission band control message (the first downward transmission control information and the second downward transmission control information) received from the MN300, the VoIP packets can accurately be sent to the MN300 while compensating for insufficient band of the wireless IP network 10A with the wireless IP network 10B.

In the same manner, according to the MN300 of the present embodiment, since VoIP packets are allocated to the wireless IP networks 10A and 10B based on a transmission band control message (the first upward transmission control information and the second upward transmission control information) received from the switching server 100, the VoIP packets can accurately be sent to the switching server 100 while compensating for insufficient band of the wireless IP network 10A with the wireless IP network 10B.

Moreover, since a transmission band control message is generated by setting an allowable range of receiving timing of VoIP packets with respect to each of upward and downward directions of the wireless IP networks 10A and 10B in the switching server 100 and the MN300 based on the comparison between the set allowable range and the actual receiving timing, the transmission band can be controlled by detecting band fluctuations in real time in accordance with the communication method of the wireless IP networks 10A and 10B. Therefore, the number of packets to be discarded without being reproduced due to a delay in arrival time can be minimized for a VoIP application.

In addition, in the present embodiment, the communication system 10 includes the wireless IP networks 10A and 10B. However, it should be noted that more wireless IP networks may be used. In addition, although insufficient transmission band is compensated both in upward and downward directions, it may be an embodiment where a transmission band is compensated in either of upward or downward direction. Further, the wireless communication cards 301 and 303 of the MN300 may be a radio unit embedded in the MN300.

Further, if a timing of the received packet is outside the corresponding allowable range, a band allocation rate is calculated based on the time difference indicating the amount of deviation and the calculated band allocation rate may be sent to the packet sender side as a transmission band control message, or the above mentioned time difference may be sent to the packet sender side as a transmission band control message so that the sender side can calculate the band allocation rate based on the time difference, and thus the transmission band can be controlled.

In addition, it should be noted that control of a transmission band based on a transmission band control message is not limited to the corresponding wireless path. It can be applied simultaneously to another wireless path to allow mutual compensation. Further, if still another wireless path is available, the wireless path can be used to compensate for the narrowed amount. For example, in the switching server 100, when the band allocation rate of the packets to be sent to the wireless IP network 10B is reduced based on a transmission band control message (the second downward transmission control information) from the MN300, it is possible to control the transmission band so that the band allocation rate of the packets to be sent to the wireless IP network 10A is increased to compensate for the reduced amount, or to control so that the reduced amount can be compensated with the still another wireless path.

Further, when the timing of the received packet is within the corresponding allowable range, for example, the time difference between the receiving timing and the shortest or the longest timing for determining the allowable range is calculated, then the band allocation rate that is higher than the present band allocation rate is calculated based on the time difference. Then the calculated band allocation rate can be sent to the packet sender side as a transmission band control message, or the above mentioned time difference can be sent to the packet sender side as a transmission band control message. Thus, on the sender side, the transmission band can be controlled by calculating the band allocation rate that is higher than the present band allocation rate based on the time difference.

[Sixth Embodiment]

In a sixth embodiment according to the present invention, compared to the communication system 10 according to the fifth embodiment shown in FIGS.12 to 16, the determination method of band status is different. According to that, a part of switching server 100 and MN 300 configurations are different. The points that are different from those of the fifth embodiment are mainly described hereinafter.

[Function block configuration of switching server 100]

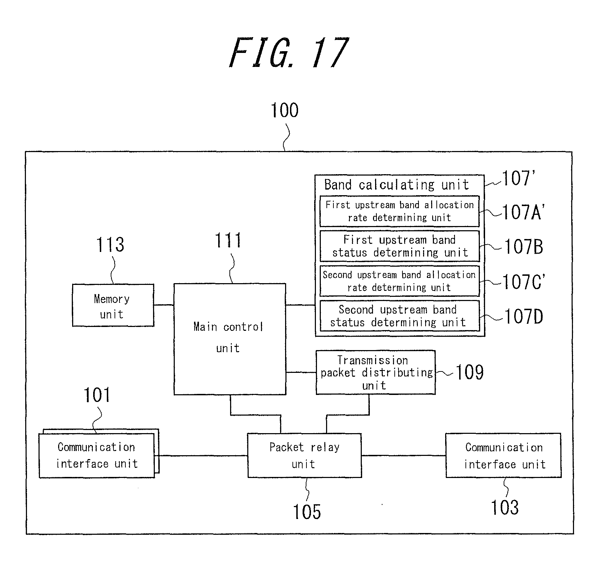

FIG. 17 is a function block configuration diagram of the switch server 100 constituting a communication system according to the sixth embodiment. With respect to the switching server 100, configuration of the band calculating unit 107' is different from that of the switching server 100 shown according to the fifth embodiment. In other words, the band calculating unit 107' calculates the band (transfer rate) of the wireless IP networks 10A and 10B required for receiving IP packets from the MN300, and comprises a first upward band allocation rate determining unit 107A', a first upward band status determining unit 107B, a second upward band allocation rate determining unit 107C' and a second upward band status determining unit 107D.

The first upward band allocation rate determining unit 107A' determines the band allocation rate of the IP packets to be sent by the MN300 to the wireless IP network 10A. Further, the first upward band status determining unit 107B determines the upward band status of the wireless IP network 10A based on the receiving timing of the sequential IP packets received through the wireless IP network 10A within the first upward monitoring period based on the band allocation rate determined by the first upward band allocation rate determining unit 107A'.

In this case, the first upward band allocation rate determining unit 107A' determines the band allocation rate of the wireless IP network 10A based on, for example, a transmission band control message (the first downward transmission control information) of the wireless IP network 10A received from the MN300, a receiving rate of the IP packets actually received through the wireless IP network 10A, or a transmission band control message (the first upward transmission control information) of the wireless IP network 10A sent to the MN300.

Further, the first upward band status determining unit 107B calculates, for example, a displacement degree of the receiving timing of the IP packets to be received through the wireless IP network 10A within a first upward monitoring period based on the band allocation rate determined by the first upward band allocation rate determining unit 107A' and compares the calculated displacement degree with the threshold corresponding to the band allocation rate determined by the first upward band allocation rate determining unit 107A'. Then good or defective of the present upward transmission band (band allocation rate) of the IP packets to be sent by the MN300 to the wireless IP network 10A is determined. In this case, it is determined as good if the displacement degree exceeds the threshold, and if the displacement degree is equal to or less than the threshold, it is determined as defective.

In the same manner, the second upward band allocation rate determining unit 107C' determines the band allocation rate of the IP packets to be sent by the MN300 to the wireless IP network 10B. Further, the second upward band status determining unit 107D determines the upward band status of the wireless IP network 10B based on the receiving timing of the sequential IP packets received through the wireless IP network 10B within the second upward monitoring period based on the band allocation rate determined by the second upward band allocation rate determining unit 107C'.

In this case, as in the case of the first upward band allocation rate determining unit 107A', the second upward band allocation rate determining unit 107C' determines the band allocation rate of the wireless IP network 10B based on, for example, a transmission band control message (the second downward transmission control information) of the wireless IP network 10B received from the MN300, a receiving rate of the IP packets actually received through the wireless IP network 10B, or a transmission band control message (the first upward transmission control information) of the wireless IP network 10B sent to the MN300.

Further, as in the case of the first upward band status determining unit 107B, the second upward band status determining unit 107D calculates, for example, a displacement degree of the receiving timing of the IP packets to be received through the wireless IP network 10B within the second upward monitoring period based on the band allocation rate determined by the second upward band allocation rate determining unit 107C' and compares the calculated displacement degree with the threshold corresponding to the band allocation rate determined by the second upward band allocation rate determining unit 107C'. Then good or defective of the present upward transmission band (band allocation rate) of the IP packets to be sent by the MN300 to the wireless IP network 10B is determined. In this case, the band status is determined as good if the displacement degree exceeds the threshold, and if the displacement degree is equal to or less than the threshold, it is determined as defective.

A determination method of the upward band status of the wireless IP networks 10A and 10B is described hereinafter. Other configurations are the same as those of the switching server 100 according to the fifth embodiment.

[Function block configuration of MN300]

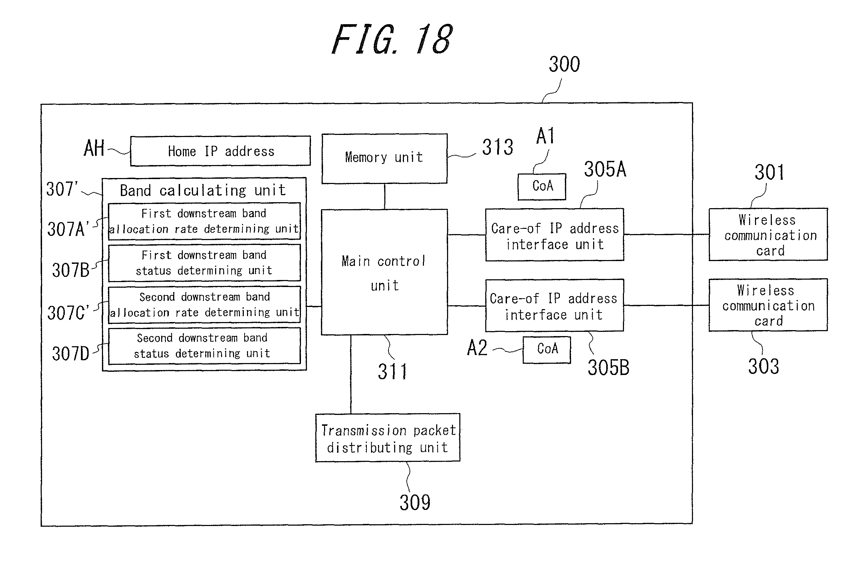

FIG. 18 is a function block configuration diagram of the MN300 constituting the communication system according to the sixth embodiment of the present invention. With respect to this MN300, the configuration of the band calculating unit 307' is different from that of the MN300 according to the fifth embodiment. In other words, the band calculating unit 307' calculates the band (transfer rate) of the wireless IP networks 10A and 10B required for receiving IP packets from the switching server 100, and comprises a first downward band allocation rate determining unit 307A', a first downward band status determining unit 307B, a second downward band allocation rate determining unit 307C' and a second downward band status determining unit 307D. The specific functions of the band calculating unit 307' are almost the same as those of the band calculating unit 107' for the switching server 100 shown in FIG.17.

In other words, the first downward band allocation rate determining unit 307A' determines the band allocation rate of the IP packets to be sent by the switching server 100 to the wireless IP network 10A. In addition, the first downward band status determining unit 307B determines the downward band status of the wireless IP network 10A based on the receiving timing of the sequential IP packets to be received through the wireless IP network 10A within the first downward monitoring period based on the band allocation rate determined by the first downward band allocation rate determining unit 307A'.

In this case, the first downward band allocation rate determining unit 307A' determines the band allocation rate of the wireless IP network 10A based on, for example, a transmission band control message (the first upward transmission control information) of the wireless IP network 10A received from the switching server 100, the receiving rate of the IP packets actually received through the wireless IP network 10A, or a transmission band control message (the first downward transmission control information) of the wireless IP network 10A sent to the switching server 100.

Further, the first downward band status determining unit 307B calculates, for example, a displacement degree of the receiving timing of the IP packets to be received through the wireless IP network 10A within a first downward monitoring period based on the band allocation rate determined by the first downward band allocation rate determining unit 307A' and compares the calculated displacement degree with the threshold corresponding to the band allocation rate determined by the first downward band allocation rate determining unit 307A'. Then good or defective of the present upward transmission band (band allocation rate) of the IP packets to be sent by the switching server 100 to the wireless IP network 10A is determined. In this case, the band status is determined as good if the displacement degree exceeds the threshold, and if the displacement degree is equal to or less than the threshold, it is determined as defective.

In the same manner, the second downward band allocation rate determining unit 307C' determines the band allocation rate of the IP packets to be sent by the switching server 100 to the wireless IP network 10B. In addition, the second downward band status determining unit 307D determines the downward band status of the wireless IP network 10B based on the receiving timing of the sequential IP packets to be received through the wireless IP network 10B within the second downward monitoring period based on the band allocation rate determined by the second downward band allocation rate determining unit 307C'.

In this case, as in the case of the first downward band allocation rate determining unit 307A', the second downward band allocation rate determining unit 307C' determines the band allocation rate of the wireless IP network 10B based on, for example, a transmission band control message (the second upward transmission control information) of the wireless IP network 10B received from the switching server 100, the receiving rate of the IP packets actually received through the wireless IP network 10B, or a transmission band control message (the second downward transmission control information) of the wireless IP network 10B sent to the switching server 100.

In addition, the second downward band status determining unit 307D, as in the case of the first downward band status determining unit 307B, for example, calculates a displacement degree of the receiving timing of the IP packets to be received through the wireless IP network 10B within the second downward monitoring period based on the band allocation rate determined by the second downward band allocation rate determining unit 307C', and compares the calculated displacement degree with the threshold corresponding to the band allocation rate determined by the second downward band allocation rate determining unit 307C'. Then good or defective of the present downward transmission band (band allocation rate) of the IP packets to be sent by the switching server 100 to the wireless IP network 10B is determined. In this case, the band status is determined as good if the displacement degree exceeds the threshold, and if the displacement degree is equal to or less than the threshold, it is determined as defective.

A determination method of downward band status for these wireless IP networks 10A and 10B is described hereinafter.

Next, a determination method of upward and downward band status for each of the wireless IP networks 10A and 10B is described. Other configurations are the same as those for the MN300 according to the fifth embodiment.

[Determination method of band status]

Next, a determination method of upward and downward band status for each of the wireless IP networks 10A and 10B is described.

In the present embodiment, in each of the switching server 100 and the MN300, as in the case of the third embodiment, the transmission band of packets of a wireless communication path is controlled by determining the band allocation rate of each wireless communication path, determining the band status of the wireless communication path based on the receiving timing of sequential packets received through the corresponding wireless communication path within the monitoring period that is inversely proportional to the determined band allocation rate, generating a transmission band control message for controlling the transmission band based on the determination result, and sending the transmission band control message to the destination of packets.

Here, also in the present embodiment, as in the case of the fifth embodiment, IP packets are sent and received through the wireless IP networked 10A used as a master path, then when the band (transfer speed) of the master path is insufficient, the wireless IP network 10B is used as a slave path and the insufficient band is compensated with the slave path. Therefore, for example, in the same manner as shown in FIG.19, assuming that the VoIP packets sent at a 20ms interval are received, when the band allocation rate of the master or slave path is 25%, a packet transmission interval of the path is 80ms as shown in FIG.9. When the band allocation rate is 50%, the packet transmission interval of the path is 40ms as shown in FIG.10, and when the band allocation rate is 100%, the packet transmission interval of the path is 20ms as shown in FIG.11. In addition, in the present embodiment, Tm shown in FIGS. 9 to 11 indicates a monitoring period based on the band allocation rate of the wireless communication path.

In the present embodiment, a monitoring period Tm, which is inversely proportional to a band allocation rate, is set, for example, as a transmission packet period for 5 packets according to a band allocation rate. Then a displacement degree $\alpha$ of the receiving timing of the IP packets received in the monitoring period Tm is calculated from the equation (1) shown above. Then it is detected that a communication path has become narrow when $\alpha \leq \alpha$ th based on the comparison between the calculated displacement degree $\alpha$ and the threshold $\alpha$ th corresponding to the band allocation rate determined with respect to the communication path.

In this manner, Tm = 400ms when the band allocation rate is 25% in FIG.9, Tm = 200ms when the band allocation rate is 50% in FIG. 10, and Tm=100ms when the band allocation rate is 100% in FIG.11. In other words, the higher the band allocation rate becomes (transmission rate is high), the shorter the Tm becomes. Therefore, in the case where the allowable band of the communication path whose band allocation rate is high has become narrow, it is possible to effectively reduce the number of packets retained in the communication path by rapidly detecting the narrow band and it is possible to effectively reduce the number of packets retained in the communication path by accurately detecting that the allowable band of the communication path whose band allocation rate is low has become narrow as well.

For example, in FIGS. 9 to 11 assume that the allowable band of the wireless communication path becomes narrow to 50% after the time t1 when the packet SN1 is received. In the case where the band allocation rate is 25% in FIG.9, if it is determined that the wireless communication path has become narrow at the time t3 of the monitoring period Tm (t2 - t3) when the next packet SN3 (black circle) is received, the retention delay time Ds caused by the packets sent until the time t3 is 240ms. Therefore, in this case, the number of packets to be discarded after the reproduction allowable line (shaded circles in the figure) is just 2.

In addition, when the band allocation rate is 50% in FIG. 10, if it is determined that the wireless communication path has become narrow at the time t3 of the monitoring period Tm (t2 - t3) when the second packet SN3 (black circle) is received after the packet SN1 is received at the time t1, the retention delay time Ds caused by the packets sent until the time t3 is 240ms. Therefore, in this case, the number of packets to be discarded after the reproduction allowable line (shaded circles) is just 3.

In the same manner, when the band allocation rate is 100% in FIG. 11, if it is determined that the wireless communication path has become narrow at the time t3 of the monitoring period Tm (t2 - t3) when the second packet SN3 (black circle) is received after the packet SN1 is received at the time t1, the retention delay time Ds caused by the packets sent until the time t3 is 160ms. Therefore, in this case, the number of packets to be discarded after the reproduction allowable line (shaded circles) is just 2.

In addition, in the present embodiment, for the switching server 100, the monitoring period Tm shown in FIGS. 9 to 11 is equivalent to the first upward monitoring period of the wireless IP network 10A or the second upward monitoring period of the wireless IP network 10B. Then for the MN300, it is equivalent to the first downward monitoring period of the wireless IP network 10A or the second downward monitoring period of the wireless IP network 10B.

In this manner, fluctuation of the allowable band according to a change in the propagation environment such as fading can always be detected rapidly and accurately and a transmission band control message for controlling a transmission band of the wireless IP networks 10A and 10B can be sent to the MN300 with respect to the switching server 100, and to the switching server 100 with respect to the MN300 by setting a monitoring period Tm that is inversely proportional to a band allocation rate with respect to each of upward and downward directions of the wireless IP networks 10A and 10B, by calculating a displacement degree $\alpha$ of the receiving timing of the IP packets received in the monitoring period Tm, and by determining that the allowable band of the communication path has become narrow when the calculated displacement degree $\alpha$ is equal to or less than the threshold $\alpha$ th corresponding to the band allocation rate of the communication path. Therefore, for a real-time application such as VoIP, it is possible to effectively reduce the number of packets to be discarded without being reproduced due to a delay in arrival time caused by fluctuations of allowable band by controlling the transmission band of the wireless communication path based on a transmission band control message.

[Operation of communication system]

Next, operation of the communication system according to the sixth embodiment is described below with reference to the communication sequence diagram shown in FIG.16. As in the case of the fifth embodiment, in step S10, the switching server 100 and the MN300 send and receive VoIP packets through the wireless IP network 10A (master path) and the Internet 20. In this step S10, all VoIP packets are routed through the wireless IP network 10A (master path) and the Internet 20.

Therefore, in this state, the switching server 100 determines that the upward band allocation rate of the wireless IP network 10A is 100% by the first upward band allocation rate determining unit 107A' of the band calculating unit 107', and the MN300 determines that the downward band allocation rate of the wireless IP network 10A is 100% by the first downward band allocation rate determining unit 307A' of the band calculating unit 307'.

After that, in step S20A, in the MN300, the first downward band status determining unit 307B of the band calculating unit 307' calculates a displacement degree $\alpha$ of the receiving timing of the VoIP packets from the above equation (1) based on the VoIP packets actually received through the wireless IP network 10A within the first downward monitoring period Tm (e.g. Tm=100ms) that is inversely proportional to the band allocation rate (in this case, 100%) determined by the first downward band allocation rate determining unit 307A'. Further, good or defective of the transmission band of the present downward direction of the wireless IP network 10A is determined based on the comparison between the calculated displacement degree $\alpha$ and the threshold $\alpha$ th corresponding to the band allocation rate determined by the first downward band allocation rate determining unit 307A'.

In the same manner, in step S20B, the first upward band status determining unit 107B of the band calculating unit 107A' in the switching server 100 calculates a displacement degree $\alpha$ of the receiving timing of the VoIP packets from the above mentioned equation (1) based on the VoIP packets actually received through the wireless IP network 10A within the first upward monitoring period Tm (e.g. Tm=100ms) that is inversely proportional to the band allocation rate (in this case, 100%) determined by the first upward band allocation rate determining unit 107A'. Further, good or defect of the present upward transmission band of the wireless IP network 10A is determined by comparing the calculated displacement degree α with the threshold α th corresponding to the band allocation rate determined by the first upward band allocation rate determining unit 107A'.

After that, in steps S30A, S30B, S40A, S40B, S50A and S50B, the same process as in the case of the fifth embodiment is performed. Then the insufficient band of the wireless IP network 10A is compensated with the wireless IP network 10B.

After that, with respect to the wireless IP network 10B, the switching server 100 determines the upward band allocation rate of the wireless IP network 10B by the second upward band allocation rate determining unit 107C' of the band calculating unit 107'. In addition, the second upward band status determining unit 107D calculates a displacement degree α of the receiving timing of the VoIP packets from the above mentioned equation (1) based on the VoIP packets actually received through the wireless IP network 10B within the second upward monitoring period Tm that is inversely proportional to the band allocation rate determined by the second upward band allocation rate determining unit 107C'. Further, the second upward band status determining unit 107D determines good or defective of the present upward transmission band of the wireless IP network 10B by comparing the calculated displacement degree α with the threshold α th corresponding to the band allocation rate determined by the second upward band allocation rate determining unit 107C', generates a transmission band control message (the second upward transmission control information) based on the determination result and sends it to the MN300.

In the same manner, with respect to the wireless IP network 10B, the MN300 determines the downward band allocation rate of the wireless IP network 10B by the second downward band allocation rate determining unit 307C' of the band calculating unit 307'. In addition, the second downward band status determining unit 307D calculates a displacement degree α of the receiving timing of the VoIP packets from the above equation (1) based on the VoIP packets actually received through the wireless IP network 10B within the second downward monitoring period Tm that is inversely proportional to the band allocation rate determined by the second downward band allocation rate determining unit 307C'. Further, the second downward band status determining unit 307D determines good or defective of the present downward transmission band of the wireless IP network 10B based on the comparison between the calculated displacement degree α and the threshold α th corresponding to the band allocation rate determined by the second downward band allocation rate determining unit 307C', generates a transmission band control message (the second downward transmission control information) based on the determination result, and sends it to the switching server 100.

Thus, the switching server 100 distributes the VoIP packets received from the IP phone terminal 42 to the wireless IP network 10B based on a transmission band control message (the second downward transmission control information) received from the MN300 and sends them thereto. In addition, the MN300 distributes the VoIP packets to the wireless IP network 10B based on the transmission band control message (the second upward transmission control information) received from the switching server 100B and sends them thereto.

Further, also with respect to the wireless IP network 10A, which is a master path, the switching server 100 determines the upward band allocation rate of the wireless IP network 10A by the first upward band allocation rate determining unit 107A' of the band calculating unit 107'. In addition, the first upward band status determining unit 107B calculates a displacement degree α of the receiving timing of the VoIP packets from the above equation (1) based on the VoIP packets actually received through the wireless IP network 10A within the first upward monitoring period Tm that is inversely proportional to the band allocation rate determined by the first upward band allocation rate determining unit 107A'. Further, the first upward band status determining unit 107B determines good or defective of the present upward transmission band of the wireless IP network 10A based on the comparison between the calculated displacement degree α and the threshold α th corresponding to the band allocation rate determined by the first upward band allocation rate determining unit 107A', generates a transmission band control message (the first upward transmission control information) based on the determination result and sends the message to the MN300.

In the same manner, with respective to the wireless IP network 10A, the MN300 determines the downward band allocation rate of the wireless IP network 10A by the first downward band allocation rate determining unit 307A' of the band calculating unit 307'. In addition, the first downward band status determining unit 307B calculates a displacement degree α of the receiving timing of the VoIP packets from the above equation (1) based on the VoIP packets actually received through the wireless IP network 10A within the first downward monitoring period Tm that is inversely proportional to the band allocation rate determined by the first downward band allocation rate determining unit 307A'. Further, the first downward band status determining unit 307B determines good or defective of the present downward transmission band of the wireless IP network 10A based on the comparison between the calculated displacement degree α and the threshold α th corresponding to the band allocation rate determined by the first downward band allocation rate determining unit 307A', generates a transmission band control message (the first downward transmission control information) based on the determination result and sends the message to the switching server 100.

Thus, the switching server 100 distributes the VoIP packets received from the IP phone terminal 42 to the wireless IP network 10A based on a transmission band control message (the first downward transmission control information) received from the MN300 and sends them thereto. Then, the MN300 distributes the VoIP packets to the wireless IP network 10A based on a transmission band control message (the first upward transmission control information) received from the switching server 100 and sends them thereto.

Moreover, a plurality of transmission bands (band allocation rate) for control are previously prepared, for example, in the switching server 100 and the MN300 respectively. Then, each time a transmission band control message for reducing a band allocation rate is received, a band allocation rate is sequentially selected in ascending order, beginning with the lowest rate.

As mentioned above, according to the switching server 100 of the present embodiment, as in the case of the switching server 100 according to the fifth embodiment, since VoIP packets are allocated to the wireless IP networks 10A and 10B based on a transmission band control message (the first downward transmission control information and the second downward transmission control information) received from the MN300, it can send VoIP packets accurately to the MN300 while compensating for insufficient band of the wireless IP network 10A with the wireless IP network 10B.

In the same manner, according to the MN300 of the present embodiment, as in the case of the MN300 according to the fifth embodiment, since VoIP packets are allocated to the wireless IP networks 10A and 10B based on a transmission band control message (the first upward transmission control information and the second upward transmission control information) received from the switching server 100, it can send VoIP packets accurately to the switching server 100 while compensating for insufficient band of the wireless IP network 10A with the wireless IP network 10B.

Furthermore, since a transmission band control message is generated in the switching server 100 and the MN300 by setting a monitoring period Tm that is inversely proportional to the band allocation rate with respect to each of upward and downward directions of the wireless IP networks 10A and 10B, and by comparing the displacement degree $\alpha$ of the receiving timing of the IP packets received within the monitoring period Tm with the threshold $\alpha$ th corresponding to the band allocation rate of the communication path, transmission band can be controlled by detecting band fluctuations in real time in accordance with the communication method of the wireless IP networks 10A and 10B. Therefore, for a real-time application such as VoIP, the number of packets to be discarded without being reproduced due to a delay in arrival time caused by fluctuations of allowable band can be effectively minimized.

In addition, also in the sixth embodiment, as in the case of the fifth embodiment, it should be noted that a wireless IP network employed is not limited to the wireless IP networks 10A and 10B. More wireless IP networks may be used. Further, compensation for insufficient transmission band is not limited to both upward and downward directions. It may be either of upward or downward direction. Further, the wireless communication cards 301 and 303 for the MN300 may be a wireless unit embedded in the MN300.

Moreover, in the sixth embodiment, an average value of the receiving timing difference between the sequential IP packets is calculated as a displacement degree $\alpha$. However, the displacement degree $\alpha$ in this case becomes more critical as it closes to the present time. Therefore, it is also possible to calculate it by averaging processing by increasing a weight coefficient as it closes to the present time. Further, since one or two received packets may deviate from the ideal receiving timing too much, a threshold $\alpha$ th can be changed according to the number of packets deviated too much. That is, the threshold $\alpha$ th is increased as the number of packets received outside the ideal receiving timing increases. In this manner, a wrong detection can be prevented. In addition, in this case, for example, it is also possible to set a threshold $\alpha$ th based on the smallest gradient obtained by calculating the statistic amount of the receiving time difference between the sequential received packets by using the received packets that are determined not to be in a retention state. Further, it is also possible to set a threshold $\alpha$ th based on the smallest value of the receiving time difference between the sequential received packets or the smallest value of the receiving time difference between every two or every three received packets or the like.

In addition, when the displacement degree $\alpha$ is less than the threshold $\alpha$ th, it is also possible to control the transmission band by calculating the band allocation rate based on the difference and by sending the calculated band allocation rate to the packet sender side as a transmission band control message, or by sending the above difference as a transmission band control message to the packet sender side where the band allocation rate is calculated based on the difference.

On the other hand, when the displacement degree $\alpha$ exceeds the threshold $\alpha$ th, it is also possible to control the transmission band by calculating the band allocation rate that is higher than the present band allocation rate based on the difference and by sending the calculated band allocation rate to the packet sender side as a transmission band control message, or by sending the above difference as a transmission band control message to the packet sender side where the band allocation rate that is higher than the present band allocation rate is calculated based on the difference.

Further, in the present embodiment, since the monitoring period Tm is inversely proportional to the band allocation rate, without calculating a displacement degree $\alpha$ as described above, the band status of the communication path can be determined by monitoring the number of packets received within the monitoring period Tm and by comparing the number of received packets with the number of packets scheduled to be received (threshold) corresponding to the band allocation rate of the communication path. In addition, in this case, the transmission band can also be controlled by calculating the band allocation rate based on the difference between the number of received packets and the threshold and by sending it to the packet sender side as a transmission band control message, or by sending the difference as a transmission band control message to the packet sender side where the band allocation rate is calculated based on the difference.

In addition, it should be noted that control of transmission band based on a transmission band control message is not limited to the corresponding wireless path. It may be conducted simultaneously to another wireless path to allow mutual compensation. Further, if still another wireless path is available, the wireless path may be used to compensate for the narrowed amount. For example, with respect to the switching server 100, when a band allocation rate of the packets to be sent to the wireless IP network 10B is reduced based on a transmission band control message (the second downward transmission control information) from the MN300, it is possible to control the transmission band so that the band allocation rate of the packets to be sent to the wireless IP network 10A is increased to compensate for the reduced amount, or to control so that the reduced amount can be compensated with the still another wireless path.

**Claims**

1. A communication apparatus for performing communication through a wireless communication path, comprising:

   a band status monitoring unit for monitoring a band status of the wireless communication path based on comparison between an allowable range indicating an allowable receiving timing range of packet to be received through the wireless communication path and a receiving timing of the packet received through the wireless communication path; and
   a transmission band control message sending unit for sending a corresponding party a transmission band control message for controlling a transmission band of packet based on a monitoring result by the band status monitoring unit.

2. A communication apparatus of claim 1, wherein the band status monitoring unit sets the allowable range based on a receiving timing of received packet for a predetermined period.

3. A communication apparatus of claim 1, further comprising:

   a transmission band control message receiving unit for receiving a transmission band control message for controlling a transmission band of packet from the corresponding party; and
   a transmission band control unit for controlling a transmission band of packet to be sent to the corresponding party based on the transmission band control message received by the transmission band control message receiving unit or the monitoring result by the band status monitoring unit.

4. A communication apparatus of claim 3, wherein the transmission band control unit controls an encoding rate of data to be sent to the corresponding party or transfer of file.

5. A communication method for performing communication through a wireless communication path, comprising:

   monitoring a band status of the wireless communication path based on an allowable range indicating an allowable receiving timing range of packet to be received through the wireless communication path and a receiving timing of packet received through the wireless communication path;
   sending a transmission band control message for controlling a transmission band of packet to a corresponding party based on the monitoring result, and
   controlling the transmission band based on the transmission band control message while performing communication.

6. A communication method for sending and receiving packets of plurality of different data to and from one corresponding party through a wireless communication path, comprising:

   monitoring a band status of the wireless communication path based on an allowable range indicating an allowable receiving timing range of packet to be received through the wireless communication path and a receiving timing of packet received through the wireless communication path, with respect to each of the plurality of different data; and
   sending a transmission band control message for reducing a transmission rate of all data to the corresponding party when it is suggested that a transmission band with respect to either one of the data has become narrow based on the monitoring result.

7. A communication method for sending and receiving packets of a plurality of different data to and from one corresponding party through a wireless communication path, comprising:

monitoring a wireless status of the wireless communication path,

monitoring a band status of the wireless communication path based on an allowable range indicating an allowable receiving timing range of packet to be received through the wireless communication path and a receiving timing of packet received through the wireless communication path with respect to each of the plurality of different data;

when it is suggested, based on the monitoring result of the wireless status and the monitoring result of the band status, that the wireless status is good and, as the band status, a transmission band for either one of the data has become narrow, sending a transmission band control message for reducing a transmission rate of the one data or for stopping sending of data to the corresponding party; and

when it is suggested that the wireless status has deteriorated and, as the band status, the transmission band for either one of the data has become narrow, sending a transmission band control message for reducing the transmission rate of all data or for stopping sending of data to the corresponding party.

8. A communication apparatus for performing communication through a wireless communication path, comprising:

a band status monitoring unit for monitoring a band status of the wireless communication path based on packet received through the wireless communication path within a monitoring period corresponding to a transmission interval of packet to be sent to the wireless communication path; and

a transmission band control message sending unit for sending a corresponding party a transmission band control message for controlling a transmission band of packet based on a monitoring result by the band status monitoring unit.

9. A communication apparatus of claim 8, wherein the band status monitoring unit sets a transmission period of sequential predetermined number of packets to be sent at the transmission interval as the monitoring period.

10. A communication apparatus of claim 8, wherein the band status monitoring unit calculates a displacement degree of a receiving timing of packet to be received through the wireless communication path within the monitoring period and monitors the band status based on comparison between the calculated displacement degree and a threshold corresponding to the transmission interval.

11. A communication apparatus of claim 8, further comprising:

a transmission band control message receiving unit for receiving a transmission band control message for controlling a transmission band of packet from the corresponding party; and

a transmission band control unit for controlling a transmission band of packet to be sent to the corresponding party based on the transmission band control message received by the transmission band control message receiving unit or the monitoring result by the band status monitoring unit.

12. A communication apparatus of claim 11, wherein the transmission band control unit controls an encoding rate of data to be sent to the corresponding party or transfer of file.

13. A communication method for performing communication through a wireless communication path, comprising:

monitoring a band status of the wireless communication path based on packet received through the wireless communication path within a monitoring period corresponding to a transmission interval of packet to be sent to the wireless communication path;

sending a transmission band control message for controlling a transmission band of packet to a corresponding party based on the monitoring result, and

controlling the transmission band based on the transmission band control message while performing communication.

14. A communication method for sending and receiving packets of a plurality of different data to and from one corresponding party through a wireless communication path, comprising:

monitoring a band status of the wireless communication path based on packet received through the wireless communication path within a monitoring period corresponding to a transmission interval of packet to be sent to the wireless communication path, with respect to each of the plurality of different data; and
sending a transmission band control message for reducing a transmission rate of all data to the corresponding party when it is suggested that a transmission band with respect to either one of the data has become narrow based on the monitoring result.

15. A communication method for sending and receiving packets of a plurality of different data to and from one corresponding party through a wireless communication path, comprising:

monitoring a wireless status of the wireless communication path;
monitoring a band status of the wireless communication path based on packet received through the wireless communication path within a monitoring period corresponding to a transmission interval of packet to be sent to the wireless communication path, with respect to each of the plurality of different data;
when it is suggested, based on a monitoring result of the wireless status and a monitoring result of the band status, that the wireless status is good and, as the band status, a transmission band for either one of the data has become narrow, sending a transmission band control message for reducing a transmission rate with respect to the one data or for stopping sending of data to the corresponding party; and
when it is suggested that the wireless status has deteriorated and, as the band status, the transmission band for either one of the data has become narrow, sending a transmission band control message for reducing the transmission rate of all data or for stopping sending of data to the corresponding party.

16. A communication control apparatus capable of using a plurality of different wireless communication paths for a wireless communication apparatus and controlling communication between the wireless communication apparatus and a corresponding party by compensating for insufficient band of one wireless communication path with respect to a band required by a real-time application in use with another wireless communication path, comprising:

a first upward allowable range setting unit for setting a first upward allowable range indicating an allowable receiving timing range of packet to be received through the one wireless communication path;
a first upward band status determining unit for determining an upward band status of the one wireless communication path based on comparison between the first upward allowable range set by the first upward allowable range setting unit and a receiving timing of packet received through the one wireless communication path;
a first upward transmission control unit for sending the wireless communication apparatus first upward transmission control information for controlling a transmission band of packet to be sent by the wireless communication apparatus to the one wireless communication path based on a determination result of the first upward band status determining unit;
a second upward allowable range setting unit for setting a second upward allowable range indicating an allowable receiving timing range of packet to be received through the another wireless communication path;
a second upward band status determining unit for determining an upward band status of the another wireless communication path based on comparison between the second upward allowable range set by the second upward allowable range setting unit and a receiving timing of packet received through the another wireless communication path; and
a second upward transmission control unit for sending the wireless communication apparatus second upward transmission control information for controlling a transmission band of packet to be sent by the wireless communication apparatus to the another wireless communication path based on a determination result of the second upward band status determining unit.

17. A communication control apparatus of claim 16, wherein

the first upward allowable range setting unit sets the first upward allowable range as an allowable range from an ideal receiving timing of packet of the one wireless communication path based on a receiving timing of packet received for a predetermined period through the one wireless communication path; and
the second upward allowable range setting unit sets the second upward allowable range as an allowable range from an ideal receiving timing of packet of the another wireless communication path based on a receiving timing of packet received for a predetermined period through the another wireless communication path.

18. A communication control apparatus of claim 16, wherein

the first upward transmission control unit sends the wireless communication apparatus control information for reducing a band allocation rate of packet to be sent to the one wireless communication path by the wireless communication apparatus as the first upward transmission control information when the first upward band status determining unit determines that a band of the one wireless communication path has become narrow; and the second upward transmission control unit sends the wireless communication apparatus control information for reducing a band allocation rate of packet to be sent to the another wireless communication path by the wireless communication apparatus as the second upward transmission control information when the second upward band status determining unit determines that a band of the another wireless communication path has become narrow.

19. A wireless communication apparatus capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising:

a first downward allowable range setting unit for setting a first downward allowable range indicating an allowable receiving timing range of packet to be received through the one wireless communication path;
a first downward band status determining unit for determining a downward band status of the one wireless communication path based on comparison between the first downward allowable range set by the first downward allowable range setting unit and a receiving timing of packet received through the one wireless communication path;
a first downward transmission control unit for sending the communication control apparatus first downward transmission control information for controlling a transmission band of packet to be sent by the communication control apparatus to the one wireless communication path based on a determination result of the first downward band status determining unit;
a second downward allowable range setting unit for setting a second downward allowable range indicating an allowable receiving timing range of packet to be received through the another wireless communication path;
a second downward band status determining unit for determining a downward band status of the another wireless communication path based on comparison between the second downward allowable range set by the second downward allowable range setting unit and a receiving timing of packet received through the another wireless communication path; and
a second downward transmission control unit for sending the communication control apparatus second downward transmission control information for controlling a transmission band of packet to be sent by the communication control apparatus to the another wireless communication path based on a determination result of the second downward band status determining unit.

20. A wireless communication apparatus of claim 19, wherein

the first downward allowable range setting unit sets the first downward allowable range as an allowable range from an ideal receiving timing of packet of the one wireless communication path based on a receiving timing of packet received for a predetermined period through the one wireless communication path; and
the second downward allowable range setting unit sets the second downward allowable range as an allowable range from an ideal receiving timing of packet of the another wireless communication path based on a receiving timing of packet received for a predetermined period through the another wireless communication path.

21. A wireless communication apparatus of claim 19, wherein

the first downward transmission control unit sends the communication control apparatus the control information for reducing a band allocation rate of packet to be sent to the one wireless communication path by the communication control apparatus as the first downward transmission control information when the first downward band status determining unit determines that a band of the one wireless communication path has become narrow; and
the second downward transmission control unit sends the communication control apparatus the control information for reducing a band allocation rate of packet to be sent to the another wireless communication path by the communication control apparatus as the second downward transmission control information when the second downward band status determining unit determines that a band of the another wireless communication path has become narrow.

22. A communication control method capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising the steps of:

setting a first upward allowable range indicating an allowable receiving timing range of packet to be received through the one wireless communication path;

determining an upward band status of the one wireless communication path based on comparison between the set first upward allowable range and a receiving timing of packet received through the one wireless communication path;

sending the wireless communication apparatus first upward transmission control information for controlling a transmission band of packet to be sent by the wireless communication apparatus to the one wireless communication path based on the determination result;

setting a second upward allowable range indicating an allowable receiving timing range of packet to be received through the another wireless communication path;

determining an upward band status of the another wireless communication path based on comparison between the set second upward allowable range and a receiving timing of packet received through the another wireless communication path; and

sending the wireless communication apparatus second upward transmission control information for controlling a transmission band of packet to be sent by the wireless communication apparatus to the another wireless communication path based on the determination result.

23. A wireless communication method capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising the steps of:

setting a first downward allowable range indicating an allowable receiving timing range of packet to be received through the one wireless communication path;

determining a downward band status of the one wireless communication path based on comparison between the set first downward allowable range and a receiving timing of packet received through the one wireless communication path;

sending the communication control apparatus first downward transmission control information for controlling a transmission band of packet to be sent by the communication control apparatus to the one wireless communication path based on the determination result;

setting a second downward allowable range indicating an allowable receiving timing range of packet to be received through the another wireless communication path;

determining a downward band status of the another wireless communication path based on comparison between the set second downward allowable range and a receiving timing of packet received through the another wireless communication path; and

sending the communication control apparatus second downward transmission control information for controlling a transmission band of packet to be sent by the communication control apparatus to the another wireless communication path based on the determination result.

24. A communication control apparatus capable of using a plurality of different wireless communication paths for a wireless communication apparatus and controlling communication between the wireless communication apparatus and a corresponding party by compensating for insufficient band of one wireless communication path with respect to a band required by a real-time application in use with another wireless communication path, comprising:

a first upward band allocation rate determining unit for determining a band allocation rate of packet to be sent by the wireless communication apparatus to the one wireless communication path;

a first upward band status determining unit for determining an upward band status of the one wireless communication path based on packet to be received through the one wireless communication path within a first upward monitoring period corresponding to a band allocation rate determined by the first upward band allocation rate determining unit;

a first upward transmission control unit for sending the wireless communication apparatus first upward transmission control information for controlling a transmission band of packet to be sent by the wireless communication apparatus to the one wireless communication path based on a determination result of the first upward band status determining unit;

a second upward band allocation rate determining unit for determining a band allocation rate of packet to be sent by the wireless communication apparatus to the another wireless communication path;

a second upward band status determining unit for determining an upward band status of the another wireless communication path based on packet to be received through the another wireless communication path within a second upward monitoring period corresponding to a band allocation rate determined by the second upward band allocation rate determining unit; and

a second upward transmission control unit for sending the wireless communication apparatus second upward transmission control information for controlling a transmission band of packet to be sent by the wireless communication apparatus to the another wireless communication path based on a determination result of the second upward band status determining unit.

25. A communication control apparatus of claim 24, wherein

the first upward monitoring period corresponds to a transmission period of sequential predetermined number of packets to be sent by the wireless communication apparatus to the one wireless communication path at a band allocation rate determined by the first upward band allocation rate determining unit; and

the second upward monitoring period corresponds to a transmission period of sequential predetermined number of packets to be sent by the wireless communication apparatus to the another wireless communication path at a band allocation rate determined by the second upward band allocation rate determining unit.

26. A communication control apparatus of claim 24, wherein

the first upward band status determining unit calculates a displacement degree of a receiving timing of packet to be received through the one wireless communication path within the first upward monitoring period and determines the upward band status of the one wireless communication path based on comparison between the calculated displacement degree and a threshold corresponding to the band allocation rate determined by the first upward band allocation rate determining unit; and

the second upward band status determining unit calculates a displacement degree of a receiving timing of packet to be received through the another wireless communication path within the second upward monitoring period and determines the upward band status of the another wireless communication path based on comparison between the calculated displacement degree and a threshold corresponding to the band allocation rate determined by the second upward band allocation rate determining unit.

27. A wireless communication apparatus capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising:

a first downward band allocation rate determining unit for determining a band allocation rate of packet to be sent by the communication control apparatus to the one wireless communication path;

a first downward band status determining unit for determining a downward band status of the one wireless communication path based on packet to be received through the one wireless communication path within a first downward monitoring period corresponding to the band allocation rate determined by the first downward band allocation rate determining unit;

a first downward transmission control unit for sending the communication control apparatus first downward transmission control information for controlling a transmission band of packet to be sent by the communication control apparatus to the one wireless communication path based on a determination result of the first downward band status determining unit;

a second downward band allocation rate determining unit for determining a band allocation rate of packet to be sent by the communication control apparatus to the another wireless communication path;

a second downward band status determining unit for determining a downward band status of the another wireless communication path based on packet to be received through the another wireless communication path within a second downward monitoring period corresponding to the band allocation rate determined by the second downward band allocation rate determining unit; and

a second downward transmission control unit for sending the communication control apparatus second downward transmission control information for controlling a transmission band of packet to be sent by the communication control apparatus to the another wireless communication path based on a determination result of the second downward band status determining unit.

**28.** A wireless communication apparatus of claim 27, wherein

the first downward monitoring period corresponds to a transmission period of sequential predetermined number of packets to be sent to the one wireless communication path by the communication control apparatus at the band allocation rate determined by the first downward band allocation rate determining unit; and
the second downward monitoring period corresponds to a transmission period of sequential predetermined number of packets to be sent to the another wireless communication path by the communication control apparatus at the band allocation rate determined by the second downward band allocation rate determining unit.

**29.** A wireless communication apparatus of claim 27, wherein

the first downward band status determining unit calculates a displacement degree of a receiving timing of packet to be received through the one wireless communication path within the first downward monitoring period and determines the downward band status of the one wireless communication path based on comparison between the calculated displacement degree and a threshold corresponding to the band allocation rate determined by the first downward band allocation rate determining unit; and
the second downward band status determining unit calculates a displacement degree of a receiving timing of packet to be received through the another wireless communication path within the second downward monitoring period and determines the downward band status of the another wireless communication path based on comparison between the calculated displacement degree and a threshold corresponding to the band allocation rate determined by the second downward band allocation rate determining unit.

**30.** A communication control method capable of using a plurality of different wireless communication paths with a wireless communication apparatus and controlling communication between the wireless communication apparatus and a corresponding party by compensating for insufficient band of one wireless communication path with respect to a band required by a real-time application in use with another wireless communication path, comprising the steps of:

determining a band allocation rate of packet to be sent by the wireless communication apparatus to the one wireless communication path;
determining an upward band status of the one wireless communication path based on packet to be received through the one wireless communication path within a first upward monitoring period corresponding to the determined band allocation rate;
sending the wireless communication apparatus first upward transmission control information for controlling a transmission band of packet to be sent by the wireless communication apparatus to the one wireless communication path based on the determination result;
determining a band allocation rate of packet to be sent by the wireless communication apparatus to the another wireless communication path;
determining an upward band status of the another wireless communication path based on packet to be received through the another wireless communication path within a second upward monitoring period corresponding to the determined band allocation rate; and
sending the wireless communication apparatus second upward transmission control information for controlling a transmission band of packet to be sent by the wireless communication apparatus to the another wireless communication path based on the determination result.

**31.** A wireless communication method capable of using a plurality of different wireless communication paths with a communication control apparatus and performing wireless communication with a corresponding party through the communication control apparatus by compensating for insufficient band of one wireless communication path with respect to a band required by a real-time application in use with another wireless communication path, comprising the steps of:

determining a band allocation rate of packet to be sent by the communication control apparatus to the one wireless communication path;
determining a downward band status of the one wireless communication path based on packet to be received through the one wireless communication path within a first downward monitoring period corresponding to the determined band allocation rate;
sending the communication control apparatus first downward transmission control information for controlling a transmission band of packet to be sent by the communication control apparatus to the one wireless communication path based on the determination result;

determining a band allocation rate of packet to be sent by the communication control apparatus to the another wireless communication path;

determining a downward band status of the another wireless communication path based on packet to be received through the another wireless communication path within a second downward monitoring period corresponding to the determined band allocation rate; and

sending the communication control apparatus second downward transmission control information for controlling a transmission band of packet to be sent by the communication control apparatus to the another wireless communication path based on the determination result.

*FIG. 1*

1
Mobile
communication
terminal

2

3
Network

4
Home video
server

FIG. 2

EP 2 081 330 A1

# *FIG. 3*

# FIG. 4

# FIG. 5

FIG. 6

# FIG. 7

```
  51                          3                    71
Mobile                   Network            Commmunication
communication                                  terminal
terminal
              2
```

FIG. 8

# FIG. 9

# FIG. 10

# FIG. 11

FIG. 12

EP 2 081 330 A1

# FIG. 13

## FIG. 14

(a)

| Data link layer header | Care-of IP address | ESP | Home IP address | TCP/UDP header | Payload | ESP trailer | ESP authentication data |
|---|---|---|---|---|---|---|---|

(b)

| Data link layer header | Care-of IP address | TCP header | Control code |
|---|---|---|---|

# FIG. 15

EP 2 081 330 A1

FIG. 16

# FIG. 17

100

Band calculating unit ~107'

First upstream band allocation rate determining unit ~107A'

First upstream band status determining unit ~107B

Second upstream band allocation rate determining unit ~107C'

Second upstream band status determining unit ~107D

113

Memory unit

111

Main control unit

Transmission packet distributing unit ~109

101

Communication interface unit

Packet relay unit

Communication interface unit

105

103

## FIG. 18

AH — Home IP address

307' — Band calculating unit

307A' — First downstream band allocation rate determining unit

307B — First downstream band status determining unit

307C' — Second downstream band allocation rate determining unit

307D — Second downstream band status determining unit

Memory unit — 313

Main control unit — 311

Transmission packet distributing unit — 309

A1 — CoA

305A — Care-of IP address interface unit

A2 — CoA — 305B — Care-of IP address interface unit

301 — Wireless communication card

303 — Wireless communication card

300

EP 2 081 330 A1

# FIG. 19

<div align="center">

**INTERNATIONAL SEARCH REPORT**

</div>

| | International application No. |
|---|---|
| | PCT/JP2007/071034 |

A.  CLASSIFICATION OF SUBJECT MATTER
*H04L12/56*(2006.01)i, *H04B7/26*(2006.01)i, *H04L12/28*(2006.01)i, *H04Q7/38*(2006.01)i

According to International Patent Classification (IPC) or to both national classification and IPC

B.  FIELDS SEARCHED

Minimum documentation searched (classification system followed by classification symbols)
H04L12/56, H04B7/26, H04L12/28, H04Q7/38

Documentation searched other than minimum documentation to the extent that such documents are included in the fields searched
Jitsuyo Shinan Koho         1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2002-325095 A  (Mitsubishi Electric Corp.),<br>08 November, 2002 (08.11.02),<br>Par. Nos. [0033] to [0034], [0055], the 3rd sentence in Par. No. [0067]<br>(Family: none) | 1,5<br>2-4,8-13 |
| A | JP 10-257095 A  (Hitachi, Ltd.),<br>25 September, 1998 (25.09.98),<br>Par. Nos. [0012], [0064]<br>& US 6341145 B | 6,7,14,15 |
| A | Tadayuki FUKUHARA, "Cognitive Musen System ni Okeru QoS Seigyo ni Kansuru Ichi Kento", IEICE Technical Report IN2006-5, 11 May, 2006 (11.05.06), Vol.106, No.42, pages 13 to 18, pages 14 to 18 '3. Teian Shuho' Ran | 16-31 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 November, 2007 (07.11.07) | Date of mailing of the international search report<br>20 November, 2007 (20.11.07) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/071034

C (Continuation).   DOCUMENTS CONSIDERED TO BE RELEVANT

| Category* | Citation of document, with indication, where appropriate, of the relevant passages | Relevant to claim No. |
|---|---|---|
| A | Kiyoshi OGAWA, "Multi-homing ni Okeru Tanmatsukan Keiro Sentaku no tame no Katahoko Chiensa Sokutei Hoshiki", The Transactions of the Institute of Electronics, Information and Communication Engineers, 01 November, 2005 (01.11.05), Vol.J88-B, No.11, pages 2251 to 2262, '3.6.3 Sokuteiyo Seigyo Packet' Ran | 16-31 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006294664 A
- JP 2006294671 A
- JP 2006294826 A
- JP 2006294830 A
- JP 2004328593 A